# EUROPEAN PATENT SPECIFICATION

(11) **EP 4 280 074 B1**
(45) Date of publication and mention of the grant of the patent: **15.01.2025**
(21) Application number: 23174024.2
(22) Date of filing: 17.05.2023
(51) Int. Cl.: G06Q 10/0639, G01V 1/28, G06Q 30/018, G06Q 30/0201, G06Q 30/06, G06Q 50/02, G06Q 50/06, H04L 9/40, G06Q 30/0282

(54) **NETWORK SECURITY FRAMEWORK FOR MAINTAINING DATA SECURITY WHILE ALLOWING REMOTE USERS TO PERFORM USER-DRIVEN QUALITY ANALYSES OF THE DATA**
NETZWERKSICHERHEITSRAHMEN ZUR AUFRECHTERHALTUNG DER DATENSICHERHEIT MIT DER MÖGLICHKEIT VON FERNBENUTZERN ZUR DURCHFÜHRUNG VON BENUTZERGESTEUERTEN QUALITÄTSANALYSEN DER DATEN
STRUCTURE DE SÉCURITÉ DE RÉSEAU POUR MAINTENIR LA SÉCURITÉ DE DONNÉES TOUT EN PERMETTANT À DES UTILISATEURS DISTANTS D'EFFECTUER DES ANALYSES DE QUALITÉ DES DONNÉES PAR L'UTILISATEUR

(30) Priority: 18.05.2022 US 202217663925
(43) Date of publication of application: 22.11.2023
(73) Proprietor: Services Pétroliers Schlumberger, 75007 Paris (FR); Geoquest Systems B.V., 2586 BJ The Hague (NL)
(72) Inventor: VERMA, Raaghav, 110075 New Delhi (IN); SRIVASTAVA, Ravi, 411006 Pune (IN); D'SOUZA, Savio, 411006 Pune (IN)
(74) Representative: Schlumberger Intellectual Property Department

(56) References cited:
- US-A1- 2005 071 283
- US-A1- 2014 324 801
- US-B1- 9 529 851

## Description

### BACKGROUND

Buying and selling of data online is common. However, a consumer may forgo purchasing an expensive data package unless the consumer can examine the data package and verify that the data package is suitable for an intended purpose. On the other hand, a vendor may be reluctant to expose the data package prior to purchase, as doing so may effectively give away the data package. A problem exists in allowing the customer to perform verification while not exposing the data to the customer.

US9529851 B1 describes a server architecture that provides for processing and analyzing data received from data furnishers to evaluate quality of the provided data. The system may format the data received from the data furnishers into standardized form. Based on configuration information and rules for the data furnishers and the provided data, the system may analyze the data set to calculate one or more data quality indicators.

### SUMMARY

The present invention resides in a method as defined in claim 1 and a system as defined in claim 12.

Other aspects of the one or more embodiments will be apparent from the following description and the appended claims.

### BRIEF DESCRIPTION OF DRAWINGS

FIG. 1 shows a computing system, in accordance with one or more embodiments.
FIG. 2, FIG. 3, FIG. 4, and FIG. 5 are flowcharts illustrating network data security methods, in accordance with one or more embodiments.
FIG. 6.1, FIG. 6.2, FIG. 6.3, FIG. 7.1, FIG. 7.2, FIG. 7.3, FIG. 8.1, FIG. 8.2, and FIG. 8.3 are network architecture diagrams, in accordance with one or more embodiments.
FIG. 9 is a table of weights, in accordance with one or more embodiments.
FIG. 10 is an example of a user interface for a network data security system, in accordance with one or more embodiments.
FIG. 11.1 and FIG. 11.2 are a computing system and network environment, in accordance with one or more embodiments.

### DETAILED DESCRIPTION

Specific embodiments will now be described in detail with reference to the accompanying figures. Like elements in the various figures are denoted by like reference numerals for consistency.

In the following detailed description of embodiments, numerous specific details are set forth in order to provide a more thorough understanding of the one or more embodiments. However, it will be apparent to one of ordinary skill in the art that the one or more embodiments may be practiced without these specific details. In other instances, well-known features have not been described in detail to avoid unnecessarily complicating the description.

In general, the one or more embodiments related to a network security framework for maintaining data security while allowing remote users to perform user-driven quality analyses of the data. Thus, in one example only, the one or more embodiments provide for methods and a network architecture that permit a remote user (*e.g.,* a consumer of data) to assess the usefulness or quality of a data package for a user-determined intended purpose, prior to actual purchase of the data package.

The one or more embodiments are directed to a technical approach to solving a technical issue. The technical issue is defining a network architecture(s) and/or a software algorithm(s) that permit a remote user or a remote software process to assess the quality or usefulness of a data package, as the remote user defines the terms "quality or usefulness," while blocking access to the data package to the remote user or the remote software process.

The technical approach is described in detail herein below, but may be summarized as follows. A data exchange platform, which is a computer enterprise system, may identify to remote users (or remote software processes) one or more data packages that may be of interest to the remote user (or remote software processes). The remote user may use the data exchange platform to select or generate one or more rules which, in the remote user's estimation, will assess the quality of a data package that may be of interest to the remote user. The rules are software algorithms which use, as input, one or more data packages and generate, as output, a quality score which serves as an estimated probability that the data package satisfies the rule. Accordingly, by selecting one or more appropriate rules, a remote user (or remote software process) may assess whether the data package would satisfy the target use of the data package.

The rules are stored and executed by a rule management service, which is a network platform distinct from the data exchange platform. The rule management service serves as an intermediary between the data exchange platform and a data package management service. The data package management service, in turn, blocks access to the data packages unless vendor-defined or server-defined conditions have been met (*e.g*., after payment for a data package has been received, after a data quality threshold has been met, *etc.*)*.* The data package management service may perform other data management functions, as described further below. Once a data package is made available to a remote user, the remote user or remote software process may manipulate the data exchange platform to receive and/or use the data package from the data package management service.

The three network layers and related software, as described above and below, prevent a remote user or remote software process from accessing or using a data package until pre-defined conditions are satisfied, but permit a rule management service to access the data packages in order to satisfy remote users or remote software processes that one or more data packages are of sufficient quality to warrant expenditure of resources to access the data packages in question.

The one or more embodiments have applications outside of a data marketplace environment, and thus represent a general advancement in computer network architectures. For example, the one or more embodiments may be used in environments where large amounts of data are exchanged between different computing platforms, but where communication bandwidth is limited. In this case, data packages are verified as suitable for an intended computing purpose prior to transition of the data package to another computing platform. In this manner, the availability of communication bandwidth is improved by limiting the number of large data packages communicated over the network.

Similarly, if a particular process on an enterprise system is a limited resource, then data packages may be verified as complete or ready for use with the particular process prior to attempting to execute the process on a data package may ultimately be deemed unsuitable (thereby wasting the resources of the limited resource). Alternatively, the priority of data may be assessed, and the execution priority of data packages be determined using the one or more embodiments. Thus, the one or more embodiments represent advancements in network architectures and software processes for implementing network security and data management.

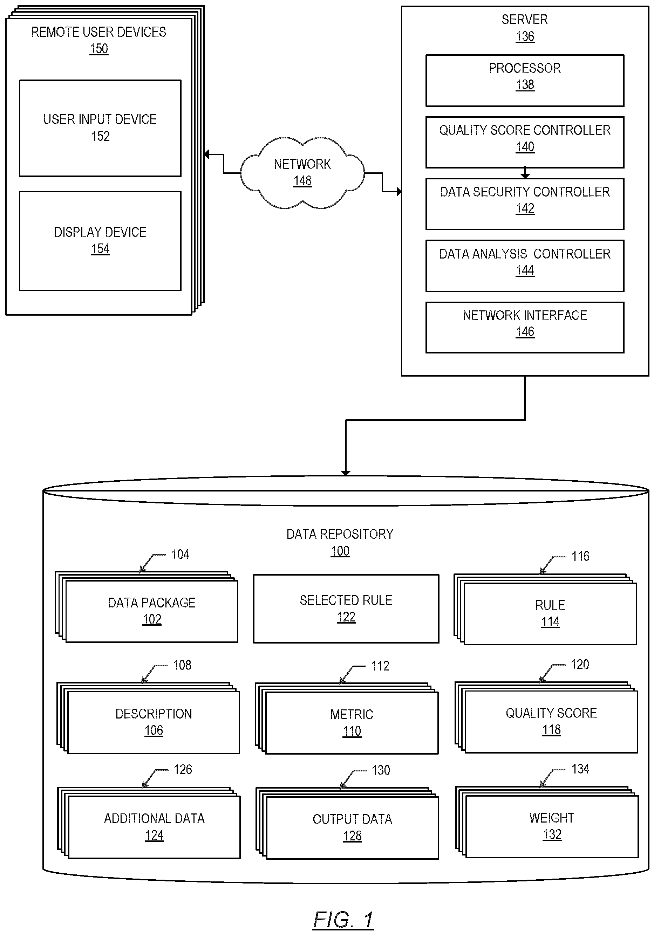

Attention is now turned to the figures. FIG. 1 shows a computing system, in accordance with one or more embodiments. The computing system includes a data repository (100). In one or more embodiments, the data repository (100) is a storage unit and/or device (e.g., a file system, database, collection of tables, or any other storage mechanism) for storing data. Further, the data repository (100) may include multiple different storage units and/or devices. The multiple different storage units and/or devices may or may not be of the same type and may or may not be located at the same physical site.

The data repository (100) includes a data package (102) among possibly multiple data packages (104). The data package (102) is one or more data structures that store data in a digital electronic format. The data package (102) may take the form of a table, a graph database, links to source data, or other data structures. An example of the data package (102) include a set of seismic measurements for a wellbore site over a given period of time. However, the data package (102) could be similar seismic information among multiple wellbore sites in an area. Thus, the data package (102) may be at least one of exploration and production data relating to a wellbore site and alternative energy data relating to an alternative energy production site.

Alternatively, the data package (102) could be read as the multiple data packages (104), such as when multiple data files containing seismic readings for one or more wellbore sites are available. Other examples of the data package (102) could be one or more data structures that store alternative energy production information, product rate generation data, excavation rates, sales information, information describing one or more individuals, or many other different kinds of information.

The data repository (100) also includes a description (106). The description (106) is a summary of the information in the data package (102). Thus, there may be multiple descriptions (108) for the multiple data packages (104). The description (106) may take the form of a text file, a sample of the data in the data package (102), a picture of an result of analyzing the data package (102), a name, a combination thereof, or some other information that summarizes the data package (102) to either a remote user or to an automated process that is determining whether the data package (102) should be purchased and/or accessed more fully.

The data repository (100) also includes a metric (110) among possibly multiple metrics (112). A metric is standard by which a data package is evaluated. The metric (110) also may be characterized as an evaluation scheme that may be used to determine whether the data package (102) is likely to satisfy the remote user or the automated process seeking data.

For example, the metric (110) may be that the data package (102) contains data that is precise to a pre-determined degree (e.g., to a certain number of decimal places). In another example, the metric (110) may be that data of a certain type is contained within the data package (102) (*e.g.,* confirmation that the data in the data package is seismic data). In still another example, the metric (110) may be that the data is stored in a pre-determined format (*e.g*., a flat database, a graph database, *etc*.)*.* The metric (110) may also be a source of the data package (*i.e.,* the remote user is interested in who or what produced the data package). Many other metrics are possible.

The data repository (100) also includes a rule (114) among possibly multiple rules (116). A rule is a technique, or a set of steps, executed on a data package in order to determine whether the data package meets the standard set by the metric. Thus, the rule (114) may be embodied as an executable file or program that uses, as input the data package (102) and generates, as output, a quality score (118) among possibly multiple quality scores (120). The quality score (118) is described below.

The rule (114) may, for example, be a script that determines the average number of decimal places for numerical data contained in the data package (102). In another example, the rule (114) may be a test for determining the type of data structure used to store information in the data package (102) (*e.g.,* whether the data is stored as a flat table database, a graph database, *etc.).* In another example, the rule (114) may be a test for determining the type of measurements contained in the data package (102) (*e.g.,* whether the data package (102) contains seismic data, well production data, solar cell production data, sales forecasts), *etc.* The rule (114) may also take the form of multiple algorithms, one or more of which are called from other platforms over a network. Many other examples of rules are possible.

The data repository (100) also includes a selected rule (122). The selected rule (122) is the rule selected by the remote user or the automated process for execution on the data package (102).

The data repository (100) also stores additional data (124) among possibly multiple sources of additional data (126). The additional data (124) is data received from a remote user or from an automated process and is used in finding one or more of the data package (102) from among the multiple data packages (104) or for finding the selected rule (122) from among the multiple rules (116). For example, the additional data (124) may be a text description of the kind of data which the remote user seeks. The text description may be used by a search engine to discover which of the multiple rules (116) and/or the multiple data packages (104) may be of interest to the remote user or the automated process.

The data repository (100) also stores output data (128) from among possibly multiple sets of output data (130). As indicated above, access to the data package (102) may take different forms other than direct access or reading of the data package (102). For example, an enterprise system may include an analysis controller to which the remote user has access. Access to the data package (102) may take the form of executing the analysis controller on the data package (102). The output data (128) is the output of the data analysis controller (i.e., the output data (128) is some result that comes from performing analysis on the data package (102), but without directly exposing the underlying data in the data package (102)).

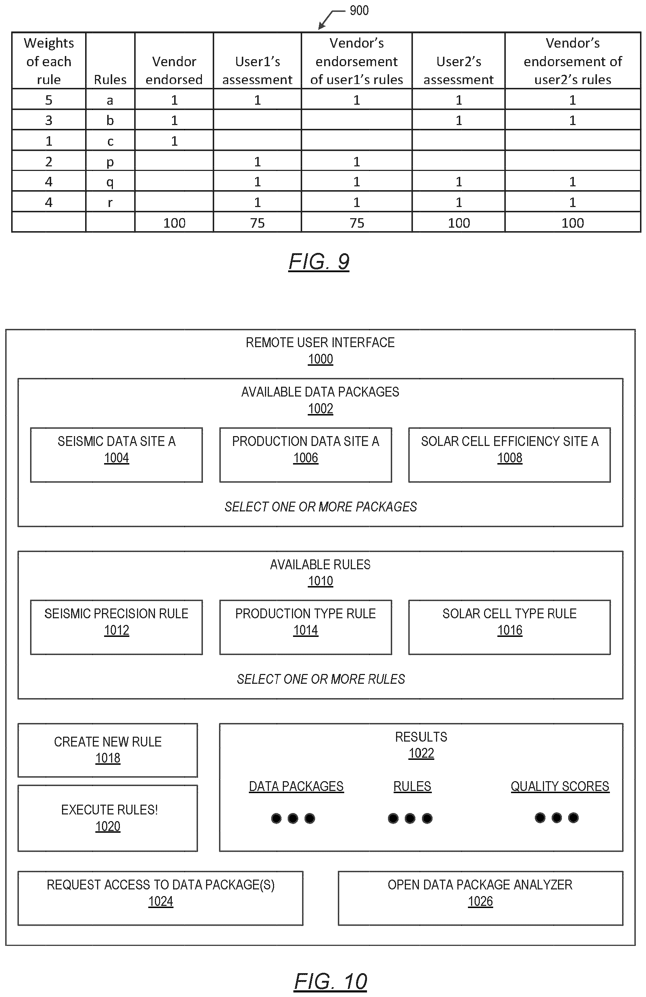

The data repository (100) also stores a weight (132) among possibly multiple weights (134). The weight (132) is a number that may be used to modify which of the multiple rules (116) is presented to the user in a prioritized order. An example of using multiple weights (134) is shown in FIG. 9.

However, the weight (132) may have other meanings or uses. For example, the weight (132) could be a number that changes the output of the rule (114). Thus, for example, multiple weights (134) can be used in combination with multiple rules (116) in order to change how the multiple rules (116) behave when executed on the data package (102) or the multiple data packages (104). In this manner, data of a particular type or having particular qualities may be found more quickly within the multiple data packages (104) in order to expose which of the multiple data packages (104) are more likely to satisfy the remote user or the automated process that will use the multiple data packages (104).

The system shown in FIG. 1 may include other components. For example, the system shown in FIG. 1 may include a server (136). The server (136) is a computer or computing system that may include one or more processors represented by the processor (138). The server (136) may include the data repository (100), or the data repository (100) may be accessed remotely by the server (136).

The server (136) also includes or has access to a quality score controller (140). The quality score controller (140) is computer software and/or hardware that is programmed to select the selected rule (122) from among the multiple rules (116). The quality score controller (140) may also be programmed to generate the quality score (118) by executing the selected rule (122) on the data package (102). The quality score controller (140) may include other functions, such as to apply the weight (132) when selecting the selected rule (122) and/or when executing the rule (114) on the data package (102).

The server (136) also includes a data security controller (142). The data security controller (142) is software and/or hardware that is programmed to block access to the data package (102), to remove users or remote devices, or to control how the data package (102) is accessed. For example, the data security controller (142) may require that a payment be verified before granting access to the data package (102) or may only grant access to the data package (102) via a data analysis controller (144) on the server (136). The data security controller (142) may use passwords, an encryption scheme, firewalls, or some other data security mechanism for securing the data package (102).

The data analysis controller (144) is software and/or hardware that is programmed to perform a pre-determined analysis on the data package (102). For example, the data analysis controller (144) may be an application or a suite of applications that use, as input, seismic data in the data package (102) and generate, as output, projected flow rates of liquids in a wellbore site. The data analysis controller (144) may be a climate prediction application that predicts how much sunlight is expected for a potential site of a solar panel farm. The data analysis controller (144) may take many different forms and is not limited to energy production. For example, the data analysis controller (144) may relate to analyzing medical data in the data package (102) in order to characterize a disease process in a patient.

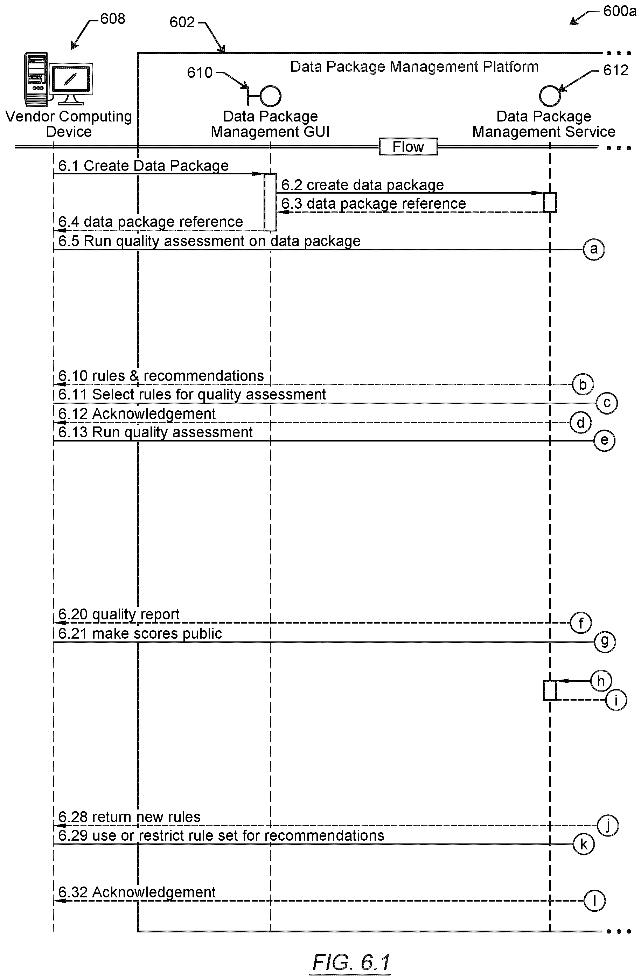

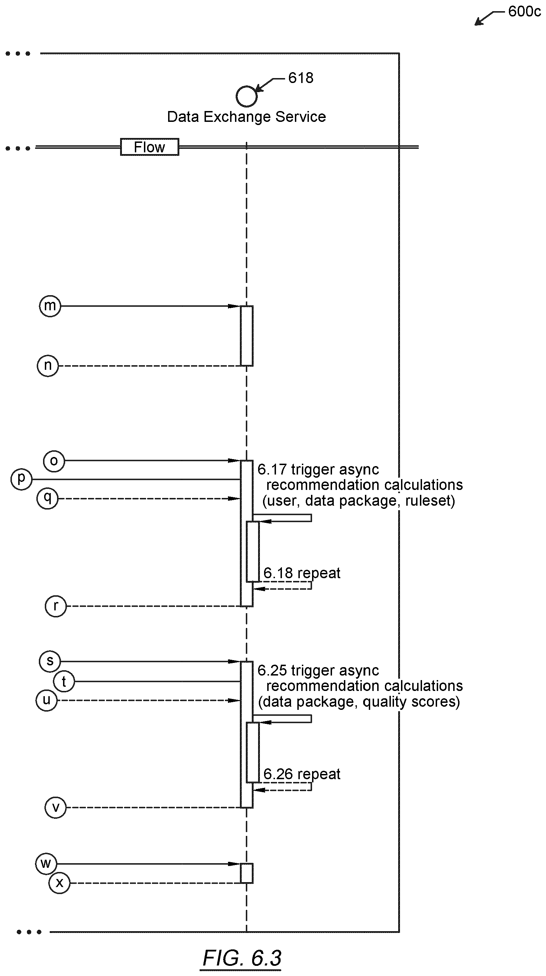

The network interface (146) is one or more application programming interfaces (APIs), communication layers, communication protocols, communication hardware, and/or graphical user interfaces (GUIs) that permit the server (136) to interact with remote computing devices and/or remote data repositories. The network interface (146) may also take the form of a platform, which is a series of servers and/or software programs dedicated to a particular purpose or enterprise. The network interface (146) may include multiple such platforms. For example, the network interface (146) may be one or more of the data management platform, rule management platform, and data platform described with respect to FIG. 6.1 through FIG. 8.3.

The server (136) may communicate over a network, such as the network (148). The network (148) may be the Internet, a local area network, a wide area network, or some other network. Thus, the network (148) is one or more computers or hardware and software devices that permit communication between remote computers, such as the remote user devices (150).

The system shown in FIG. 1 may include the remote user devices (150). However, in other embodiments, the remote user devices (150) may be considered distinct from and not part of the system shown in FIG. 1. The remote user devices (150) are computers (desktops, laptops, tablets, mobile phones, *etc.)* operated by one or more remote users and/or remote applications. The remote users or the remote applications are interested in the multiple data packages (104) and may access the server (136) to determine which of the multiple rules (116) to execute on the multiple data packages (104) in order to generate the multiple quality scores (120). The remote users or remote applications may also interact with the server (136) via the network (148) to gain access, either directly or indirectly, to the data package (102) or multiple data packages (104).

Each of the remote user devices (150) may include a user input device (152) and a display device (154). The user input device (152) may display a client side graphical user interface (GUI), a keyboard, a mouse, a voice controller, *etc.* that permit interaction with the remote user devices (150) and hence with the network interface (146) on the server (136). The display device (154) is hardware that displays one or more aspects of the network interface (146) to a remote user.

While FIG. 1 shows a configuration of components, other configurations may be used without departing from the scope of the one or more embodiments. For example, various components may be combined to create a single component. As another example, the functionality performed by a single component may be performed by two or more components.

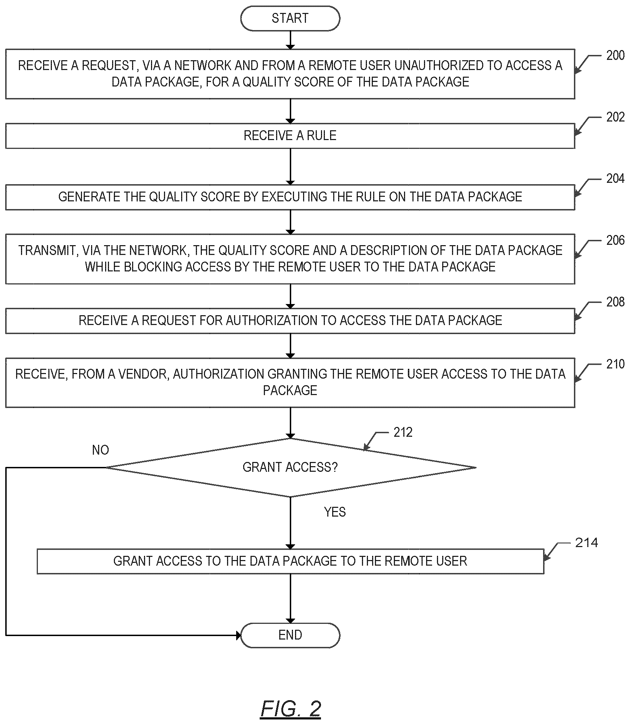

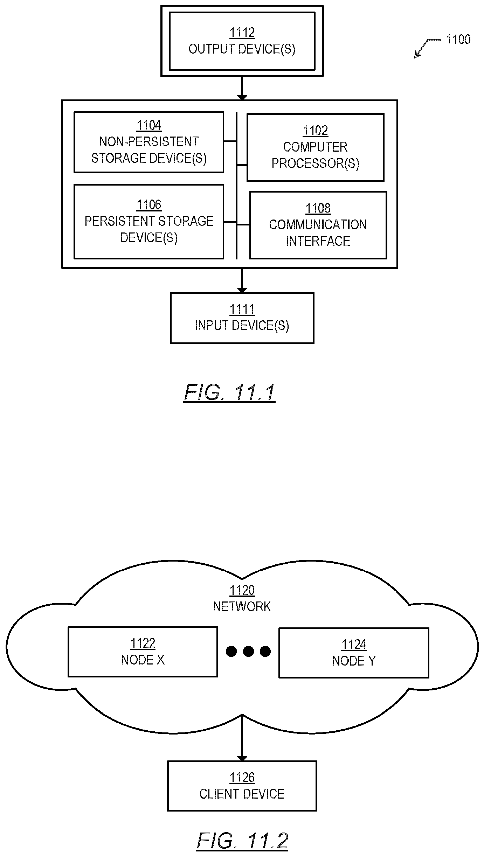

FIG. 2 through FIG. 5 are flowcharts, in accordance with one or more embodiments. The flowcharts may be implemented on a computer using the system shown in FIG. 1, possibly in conjunction with the computing system and network environment described with respect to FIG. 11.1 and FIG. 11.2.

In particular, FIG. 2 is a method of a client using a remote device to access a server in order to generate a quality score for a data package. The method includes, at step 200, receiving a request, via a network and from a remote user unauthorized to access a data package, for a quality score of the data package. The request may be received from a user manipulating a remote user device indicating interest in one or more data packages. The request may also be received from an automated process (i.e., another software application or hardware process) that issues a call to a rule management platform to generate a quality score for a data package available on a data exchange platform. In either case, one or more application programming interfaces (APIs) may be used to route requests, as shown in the architecture diagrams of FIG. 6.1 through FIG. 8.3.

As indicated above with respect to FIG. 1, and further below, the quality score will be evaluated according to a rule which is selected on the basis of a metric. The metric may be defined by the remote user.

At step 202, a rule is received. Again, as described above with respect to FIG. 1, the rule is programmed to use, as input, the data package and generate, as output, the quality score. The rule may be received by direct selection by the remote user or the automated calling process. The rule may be received by creation of a rule and submission of the new rule after approval, if appropriate. The rule may be received by sorting the rules according to a priority scheme, such as that described below, and automatically selected according to the priority scheme. The rule received in step 202 may be referred-to as the "selected rule" (122) in FIG. 1.

The rule may also be received via generation or selection according to an automated process. The automated process used to generate or select a rule (*e.g.,* the selected rule (122) of FIG. 1) may be termed a "selection rule." In other words, a "selection rule" is a different kind of rule that is used for determining automatically which of the multiple rules (116) in FIG. 1, or perhaps a newly generated rule, should be the selected rule (122) in FIG. 1). For example, the quality score controller (140) of FIG. 1 may execute a selection rule to determine the selected rule. In an example, the selection rule may use, as input, the metric and generate, as output, the selected rule. Other rule selection methods are possible.

As also indicated above in FIG. 1, the rule *(i.e.,* the selected rule (122) in FIG. 1) is specified at least in part based on the metric. For example, the user may select a rule that assesses whether data in a data package is of a particular type, in a particular format, has a pre-determined precision, combinations thereof, and/or possibly other metrics. Again, an automated process may use a pre-defined metric to evaluate which rules are appropriate to execute on one or more data packages.

At step 204, the quality score is generated by executing the rule on the data package. The rule may be executed by executing the rule as an executable file and designating the rule, or multiple rules, as input. The quality score is the output of the rule. Executing the rule may also be performed by transmitting the data package to a remotely executed rule and then receiving the quality score.

At step 206, the quality score and a description of the data package are transmitted via a network, while blocking access by the remote user to the data package. The quality score and description may be combined in a file that is transferred to a remote user device or to a remote automated process. The quality score and description may also be provided to a data exchange marketplace platform and there presented to the remote user via a graphical user interface generated by the platform, or may be provided a local automated process executing on the data exchange platform.

In turn, access by the remote user is blocked because the data package itself is not exposed or transmitted to the remote user or a remote process. In addition, a firewall, encryption, password protection, or other data security may be applied to the data package in order to block access to the data package by the remote user or the remote process.

The method of FIG. 2 may terminate after step 206. However, the method may continue at step 208, at which a request for authorization to access the data package is received. The request for authorization to access may be received in the form of a command or request transmitted either directly from the remote user device, or from an application GUI of a data marketplace platform. Alternatively, the request may take the form of an analysis application requesting access to the data package, possibly without exposing the data package to the remote user device.

Receiving the request for authorization at step 208 may generate to a vendor data system a request to authorize access to the data package. The vendor data system may grant the authorization upon the satisfaction of a precondition, such as a verified identity of the requesting remote user or remote process, a password, a receipt of funds, other conditions, or combinations thereof.

At step 210, authorization granting the remote user access to the data package is received from the vendor. Authorization may be automatic or may take the form of a command to release the data package. Alternatively authorization may be received by allowing the remote user device or remote process to directly or indirectly access the data package.

At step 212 a determination is made whether access is granted. If access is granted (a "yes" determination at step 212), then at step 214 access to the data package is granted to the remote user or remote process. If not (a "no" determination at step 212), then access to the data package continues to be denied or blocked. Granting access may include providing the data package itself to the remote user, or allowing the remote user to retrieve the data package. Granting access may include permitting the remote user to generate output data by granting permission to the remote user to use a data analysis controller controlled by the vendor to analyze the data package, while preventing the remote user from directly accessing the data package. In this case, the data analysis controller generates the output data. In either case, the method of FIG. 2 may terminate thereafter.

The method of FIG. 1 may be varied. For example, prior to step 202, additional data may be received from the remote user. In this case, a rule selector may use as input, the additional data and a plurality of pre-generated rules and generates, as output, the suggested rule. In this case, receiving the rule at step 202 includes receiving the suggested rule.

In another variation, receiving the rule at step 202 includes receiving, from the remote user, a selection of a selected rule from among multiple pre-prepared rules. For example, one or more rules may be presented on a GUI to a remote user, possibly as a prioritized list of rules, and the remote user may select from among the displayed rules.

In still another variation, again prior to or as part of step 202, receiving the rule includes presenting, to the remote user, a rules generation interface. The rules generation interface is a GUI which allows a user to build or program a new rule, or to specify the parameters of a new rule and then build and/or compile the new rule. After the new rule is generated, the new rule is received via the rules generation interface. Optionally, a vendor may verify that the user-generated rule is both valid and avoids granting, to the remote user, access to the data package or otherwise avoids granting some other information that the vendor does not which the remote user to receive without proper authorization. Assuming that permission is granted, then receiving the rule at step 202 includes receiving at least the new, user-generated rule.

In an example, a vendor receives a rule. The vendor reviews the detail of the rule. Because the vendor know the data, the vendor can infer from the details of the rule whether the rule violates data confidentiality. For example, assume that the rule claims to check whether the number of decimal points is valid, from the remote user's perspective, but the rule also checks for a range of values in the data. If the vendor believes that checking for a range of values would violate data confidentiality, then then vendor may refuse to validate the rule. The vendor could also request that the remote user submit a new rule, or approve a vendor-modified rule that only checks for the number of decimal points requested by the remote user.

Once the new, user-generated rule is authorized, then the new rule may be added to a set of pre-generated rules. In other words, the new rule may be later presented to other users as an optional metric for evaluating the same or other data packages that are available via the data exchange marketplace.

For example, later, a second request may be received via the network and from the remote user, for a second quality score of a second data package. The remote user may be the same remote user or a different remote user, including possibly an automated process. A second metric for evaluating the second quality score is defined by the remote user. The user-generated rule (previously generated as new by the same or different remote user) is selected by the remote user as the rule that will be used to determine whether the data package satisfies the metric. The user-generated rule is programmed to use, as input, the second data package and generate, as output, the second quality score. The second quality score is generated by executing the user-generated rule on the second data package. The second quality score is a numerical evaluation of the degree to which the data package conforms to the metric. The second quality score and a second description of the second data package is transmitted via the network, while blocking access by the remote user to the data package.

In another related embodiment, the user-generated rule may be suggested to a second user in response to a second request for a second quality score received from the second user. The second user is different than the remote user mentioned above. Thus, again, newly generated rules may be available to other users.

Turning to another example, the method of FIG. 2 may also include combining data packages and/or combining rules. Thus, for example, the method may also include selecting, based on at least one of the rule and the data package, a second data package from among additional data packages. A second quality score is generated by executing the rule on the second data package. The second quality score and a description of the second data package are transmitted via a network, while blocking access by the remote user to the second data package.

Still other variations are possible. For example, either selection of the rule or execution of the rule may be weighted. For example, the method may include weighting, prior to generating the quality score, the rule. Rules with more weight are more likely to presented first in an ordered prioritized list of rules to be presented to one or more remote users. For example, as described with respect to FIG. 9, below, rules that are used more frequently may be given a higher weight and thus presented first in a list of available rules presented to the user.

As indicated above, rules may be combined. For example, receiving the rule at step 202 may include receiving multiple rules. In this case, generating the quality score includes executing the rules on the data package. Generating the quality score then includes combining outputs of the plurality of rules. The outputs may be combined via an averaging or some other process, including for example a logistical regression or some other method of combining the outputs of rules.

The outputs of some of the multiple rules may be given more weight than others of the multiple rules. Thus, for example, weighting may be performed based on one or more of a vendor endorsement of a prior selection of rules previously executed on the data package, a second remote user's endorsement of a prior selection of rules previously executed on the data package, and a second remote user's endorsement of the data package. Other weighting schemes may be used.

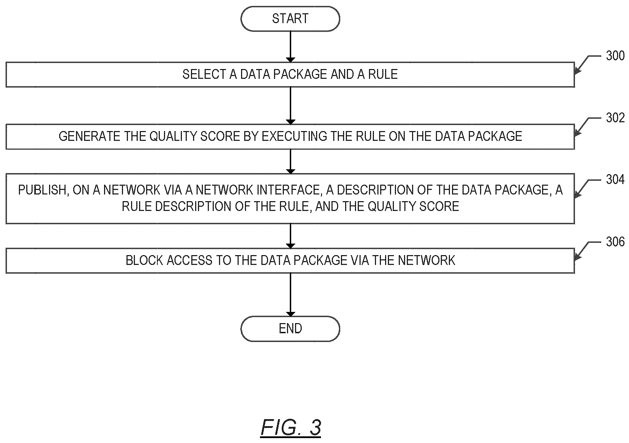

Attention is now turned to FIG. 3. The method of FIG. 3 may be characterized as a method of a vendor publishing data package descriptions and corresponding quality scores generated by rules selected to the vendor. Thus, FIG. 3 is a variation of FIG. 2, but instead of the remote user driving a server-side process, the vendor is driving the server-side process. Like FIG. 2, FIG. 3 may be implemented using the system of FIG. 1 and/or the system of FIG. 11.1 and FIG. 11.2.

At step 300, a data package and a rule are selected. Again, the rule is programmed to use, as input, the data package and generate, as output, a quality score associated with the data package. The data package and the rule are both selected by the vendor of the data package, or by an automated process controlled by the vendor. For example, the vendor may guess at what metrics and hence what rules might interest potential buyers of the data package. The vendor may then select rules accordingly for the selected data package. Alternatively, an automated process may analyze a data package and automatically select, according to pre-determined metrics, a set of rules for execution on the data package.

At step 302, the quality score is generated by executing the rule on the data package. Executing the rule is performed in a manner similar to that described with respect to step 204 of FIG. 2.

At step 304, a description of the data package, a rule description of the rule, and the quality score are published on a network via a network interface. For example, the generated information described for step 304 may be published on a data marketplace platform so that potential purchasers of the data package may review and evaluate data packages for possible purchase. The generated information may also be saved in the form of a file which may be transferred, or otherwise made available, to a remote user.

At step 306, access to the data package via the network is blocked. Access may be blocked in a manner similar to that described above with respect to step 206 of FIG. 2.

The method of FIG. 3 may be varied. For example, additional data packages may be selected. One or more additional rules may be programmed to use, as input, one or more of the additional data packages and generate, as output, additional quality scores associated with the additional data packages. Additional quality scores are generated. The additional package descriptions, additional rule descriptions, and additional quality scores are all published via the network. Initial access to the additional data packages is blocked, at least until authorization granting access to the data packages are received (*e.g.,* after payment or other authorization). A request for access to a selected one of the additional data packages, or to the data package referenced in the method of FIG. 3, may be received. The request may be authorized, such as, for example, when payment is received, when a password is given, when biometric information received, when third party verification or authorization is received, or possibly many other preconditions satisfied alone or in combination. After authorization is received, access to selected ones of the additional data packages or the data package is granted. Again, grant may take the form of allowing access to the one or more data packages, or allowing one or more data analysis applications or controllers to use the one or more data packages.

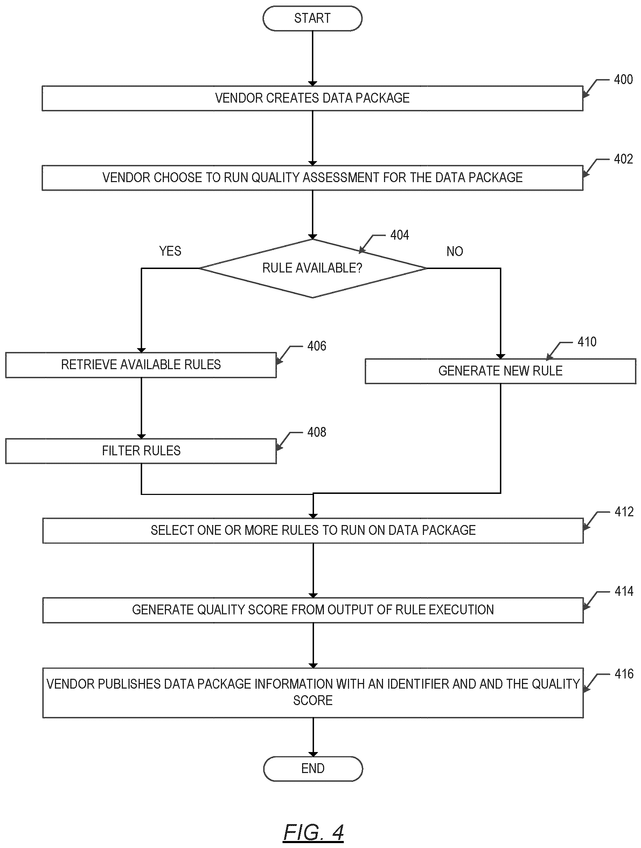

Attention is now turned to FIG. 4. FIG. 4 is an alternative method that may be implemented in the system shown in FIG. 1. The method of FIG. 4 is a method of a vendor preparing a data package for sale in a data packaging system.

At step 400, the vendor creates the data package. For example, the vendor may take seismic measurements at a wellbore site, record energy generated a windmill farm, take biological measurements, measure network health metrics, or any other valuable data. The data is generated using sensors or, in the case of computer network information, one or more monitoring programs.

Thus, the data package is an entity containing one or more types of data from a producer, which is being made available in a data exchange marketplace platform. The data package may include the data itself, a marketing representation of the data (*e.g.,* a summary, a name, a sample, combinations thereof, *etc.),* a price or other conditions for accessing the data, producers information, and/or other information. The data package may be created and published by the vendor. The data marketplace platform may have a subscription system by which means a consumer of data may receive notifications that a new data package is available on the data exchange marketplace. Once a package is published, the consumer can find the package from a publicly available list.

At step 402, the vendor chooses to run a quality assessment for the data package. Every consumer has different wants for their own uses. The consumers thus have different metrics for ascertaining whether the data package is worth the purchase price or worth the effort of satisfying other access conditions. Examples of such metrics are: the area to which package/data belongs to, data types and health, quality of data, *etc.* By providing quality scores to the vendor, along with the rules used to generate the quality scores, consumers may narrow their search for desirable data packages that will meet their desires according to their own metrics.

At step 404, a determination is made whether a rule is available. If the rule is available (a "yes" at step 404), then the system retrieves the available rules at step 406. At step 408, optionally, the rules are filtered and presented to the vendor.

For example, if a vendor has created too many rulesets, it is difficult to view them all together and select from the large list every time a data package is to be evaluated. To address this challenge, the vendor may be presented with a prioritized list of rulesets. The prioritized lists of rulesets may be based on how frequently a particular ruleset has been used in past or some other condition. For example, a metric might be entered as a search parameter, and a list of rules that match the metric may be presented to the vendor in a prioritized order.

Alternatively, a set of attributes and/or parameters may be associated with unique keys that may be used to decide the priority of rules in the rule set. The attributes may include, but are not limited to, vendor name, data types included in package, ruleset name, frequency to use a ruleset, *etc.* Based on the unique key, the rule management platform may identify prioritized lists of rulesets among all existing ruleset and present the prioritized list to the vendor in decreasing order. Thus, the system may be programmed to help the vendor to identify and generate quality scores quickly, *i.e.,* at a speed that is commensurate with the pace of changes in market demand for data packages.

Alternatively, returning to step 404, the vendor may generate a new rule at step 410. The new rules may be generated as described above with respect to FIG. 2 and FIG. 3. In still another variation, the new rules may be generated in addition to retrieving available rules, and/or multiple rules may be generated or selected in combination.

At step 412, one or more rules are selected to run on the data package. The selection may be made as described above with respect to FIG. 2 and FIG. 3. At step 414, the quality score is generated from the output of rule execution, as described with respect to FIG. 2 and FIG. 3. Again, the quality score may be a combination of the outputs of multiple rules.

At step 416, the vendor publishes the data package information with an identifier and the quality score. The published information is then available for inspection by consumers on the data marketplace platform.

In a variation, the system may ask the vendor to make the ruleset public or private. For example, if the vendor does not want a ruleset to be exposed to a consumer, the vendor can designate the ruleset as private. In such case, only the ruleset name and quality score are exposed to a consumer, but not the content of ruleset. Alternately, to make everything publicly available, the vendor may select a public option and publish the score along with the details of ruleset.

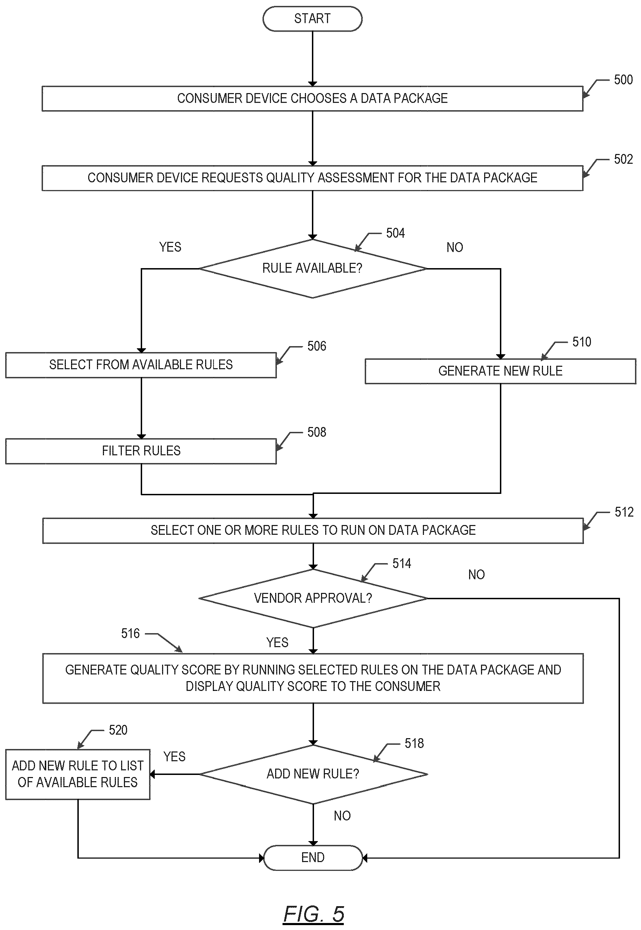

Attention is now turned to FIG. 5. FIG. 5 is a variation of the methods of FIG. 2 through FIG. 4. The method of FIG. 5 may be implemented using the system of FIG. 1 and/or the systems shown in FIG. 11.1 and FIG. 11.2. The method of FIG. 5 is an example of a consumer-initiated process.

At step 500, a consumer device chooses a data package. For example, the consumer may view a list of data packages published on a GUI of a data marketplace exchange, and then use a remote input device to select data packages of interest.

At step 502, the consumer device requests a quality assessment for the data package. For example, with one or more data packages selected, the user may select a button on the GUI that will take the user into a new screen in which rules are selected and generated.

At step 504, a determination is made whether a rule is available. The server may determine whether rules are available that would be relevant to the selected data package. Thus, the server may, at step 506, select from available rules (a "yes" determination at step 504). Alternatively or in addition, the remote user may select from available rules.

Rules that are not applicable to the data type or data structure of the selected data package may be filtered, such as at step 508. Filtering the rules may also include prioritizing the rules, or weighting the rules as described with respect to FIG. 9.

If a rule is not available (a "no" determination at step 504), then at step 510 a new rule is generated. The rule may be generated automatically by the server using one or more metrics. For example, the user may select a series of metrics, and then programming rules executed to turn the metrics into executable code that may be executed as a new rule on the data package. The user may also generate the rule on the user's own accord.

At step 512, the one or more rules are selected to run on the data package. Selection of the rules may be indicated by a remote user selecting an "approve" or "finished" or like button, or issuing some other command indicating that the desired rules have been selected.

At step 514, a determination is made whether the vendor approves of the rule selection. If the selected rules were selected from pre-generated rules programmed by the vendor, then approval may be automatic. However, if the rule were remote user generated or remote user created, then the rule may be subject to additional scrutiny by the vendor. For example, the vendor may run a virus scan, check the rule for bugs or errors, or even prompt a human programmer to check the newly generated rule in order to ensure that sensitive data will not be released to the consumer when the newly generated rule is executed.

If vendor approval is not received (a "no" determination at step 514), then the process terminates. The consumer may receive a message indicating that the rule is not approved, and that the consumer should attempt to use a different rule or perhaps a different combination of rules.

If vendor approval is received (a "yes" determination at step 514), then at step 516 a quality score is generated by running the selected rules on the data package. In addition, the quality score for the data package is displayed to the consumer, such as via the GUI on the data exchange platform.

At step 518 a determination is made whether to add the new rule to a list of existing available rules that, for example, may be provided at step 506 when the process is repeated for a different remote user or a different inquiry. If so (a "yes" determination at step 518), then the new rule is added to the list of available rules. For example, the new rule may be added to the database of existing rules. Metadata may be added to the new rule in order to help index and search the rule (e.g., to associate metric keywords with the new rule, who created the new rule, when the new rule was created, how many times the new rule was used to evaluate a quality score, *etc.).* Thereafter, or in the event that the new rule is not to be added, (a "no" determination at step 518), then the method of FIG. 5 terminates.

While the various steps in the flowcharts of FIG. 2 through FIG. 5 are presented and described sequentially, one of ordinary skill will appreciate that some or all of the steps may be executed in different orders, may be combined or omitted, and some or all of the steps may be executed in parallel. Furthermore, the steps may be performed actively or passively. For example, some steps may be performed using polling or be interrupt driven in accordance with one or more embodiments. By way of an example, determination steps may not require a processor to process an instruction unless an interrupt is received to signify that condition exists in accordance with one or more embodiments. As another example, determination steps may be performed by performing a test, such as checking a data value to test whether the value is consistent with the tested condition in accordance with one or more embodiments. Thus, the one or more embodiments are not necessarily limited by the examples provided herein.

FIG. 6.1 through FIG 8.83 show exemplary network architectures for implementing the systems and methods described with respect to FIG. 1 through FIG. 5. In particular, FIG. 6.1 through FIG. 8.3 show data flow between services of different networked platforms that may be used to implement the methods described with respect to FIG. 2 through FIG. 5. Other data flows or network arrangements are possible, so the architectural data flow diagrams shown with respect to FIG. 6.1 through FIG. 8.3 are exemplary only.

Attention is first turned to data flow architecture (600) in FIG. 6.1 through FIG. 6.3, which should be considered together. The data flow architecture (600) includes three platforms, including data package management platform (602), rules management platform (604), and data exchange platform (606). Each platform is a set of software and/or hardware that serve as a separate enterprise executing on one or more servers. In an embodiment, all three platforms may be executing on a single server. However, it is contemplated that each platform is executed by a different server, and in some cases two or all three of the platforms may be owned and operated by different ownership entities. For example, the data package management platform (602), the rules management platform (604), and the data exchange platform (606) could possibly be owned by three different companies that have agreed to, acting in concert, provide the data packages for sale, the rules management for evaluating the customer-defined quality of the data packages, and the exchange platform for requesting and receiving access to data packages.

If desirable, a vendor computing device (608) may manage one or more of the three platforms. The vendor computing device (608) is a user and/or an automated process operating a remote device in communication with one or more of the platforms and given authorization to manage and/or operate the one or more of the platforms.

At 6.1, the vendor computing device (608) initiates creation of a data package by interacting with a data package management GUI (610), as described above. At 6.2, the data package is created is created via commands initiated by the data package management GUI (610). The command is sent to the data package management service (612). Then, at 6.3, the data package management service (612) returns a data package reference back to the data package management GUI (610). Then, at 6.4, the data package reference is returned to the vendor computing device (608).

At 6.5, the admin (or automated process) commands that a quality assessment of the data package be run. The command is sent to the data exchange GUI (616) on the data exchange platform (606). The data exchange GUI (616) then requests, at 6.6, available quality rules from the rule management service (614) of the rules management platform (604). At 6.7 the rule management service (614) returns the rules to the data exchange GUI (616) of the data exchange platform (606).

At 6.8, the data exchange GUI (616) sends the rules to the data exchange service (618) of the data exchange platform (606). The data exchange platform (606) may recommend rules that are used by data of a similar type. The recommended rules may have been used by the user, or by other users. The data exchange platform (606) may anonymize the recommendations and may hide user information when recommending rules, in order to prevent other users from knowing which users have asked for or created which rules.

At 6.9, the data exchange service (618) returns the recommended or requested rules to the data exchange GUI (616). Alternatively, or in addition, rule recommendations may be transmitted. At 6.10, the data exchange GUI (616) then returns the recommended or requested rules (or rule recommendations) to the vendor computing device (608).

At 6.11, the vendor computing device (608) selects one or more of the rules for use in a quality assessment on one or more data packages, and transmits the selection to the data exchange GUI (616) of the data exchange platform (606). At 6.12, an acknowledgement is returned from the data exchange GUI (616) to the vendor computing device (608). At 6.13, the vendor computing device (608) requests that the quality assessment be run using the selected rules, transmitting the command to the data exchange GUI (616) on the data exchange platform (606).

At 6.14, the data exchange GUI (616) requests the data exchange service (618) to run the quality assessment, referencing the one or more selected data package(s) and the one or more selected rule(s). The data exchange GUI (616) in turns sends the request to the rule management service (614) of the rules management platform (604) at 6.15. At 6.16, the rules are executed, and a quality report generated and transmitted to the data exchange service (618).

At 6.17, the data exchange service (618) may trigger asynchronous recommendation calculations in view of the user, data package(s), and rule set. For example, at this point, the data exchange platform (606) may update the weights for various combinations of user identifier, data records, and rules in order to enable future recommendations for new rules. Step 6.18 indicates that the process may repeat as needed.

The term 'asynchronous,' in the context of step 618, means that the calculations takes place without delaying further processing. The 'recommendation calculations' may include, for example, updating weights for rules, such as weights for the rules, for the user, for the data package, for the type of data, *etc.,* and then updating one or more rules. Thus, asynchronous recommendation calculations provide a better *(i.e.,* faster) user experience by preventing delays for the user while waiting for the system to learn. Concurrently, the user experience is improved by providing better recommendations the next time the system is used. An example of asynchronous recommendation calculations is described with respect to FIG. 9.

At step 6.19 the data exchange service (618) transmits the final quality repot to the data exchange GUI (616). In turn, at 6.20, the data exchange GUI (616) of the data exchange platform (606) transmits the quality report to the vendor computing device (608).

Optionally, at 6.21, the vendor computing device (608) may make the quality score(s) public, by transmitting a "make public" order to the data exchange GUI (616) of the data exchange platform (606). At 6.22, the data exchange GUI (616) notifies the data exchange service (618) that the scores should be marked as public. At 6.23, the data exchange service (618) of the data exchange platform (606) directs the data package management service (612) of the data package management platform (602) that the data package(s) should be marked with the quality score(s). At 6.24, the data package management service (612) returns a confirmation to the data exchange service (618) of the data exchange platform (606).

Again, asynchronous recommendation calculations may be performed, as described above, as shown at 6.25. Again, the data exchange platform (606) may update the weights for various combinations of user(s), data package(s), and rule(s) to enable future recommendations for new rules. Step 2.26 indicates that the process may repeat as needed.

At step 6.27, the new rules are returned to the data exchange GUI (616) of the data exchange platform (606). At step 6.28, the new rules are returned to the vendor computing device (608).

Optionally, at 6.29, the vendor computing device (608) may use or restrict (*e.g.,* allow or prevent the use of) the new rules and/or recommendations for the new rules. At 6.30, the command to use or restrict the rules is transmitted to the data exchange service (618) of the data exchange platform (606). The command may take the form of a adding the new rules to a whitelist *(i.e.,* allowed) or a blacklist *(i.e.,* restricted) or to a restricted list *(i.e.,* allowed to some customers on the data exchange platform (606), but not others).

At 6.31, the data exchange service (618) then issues an acknowledgement to the data exchange GUI (616). The rules are then restricted or allowed by the data exchange platform (606) with respect to customers using the data exchange platform (606), as indicated above. At 6.32, the data exchange GUI (616) then transmits an acknowledgement of the allowance or restriction of the new rules to the vendor computing device (608). The data flow of FIG. 6.1 through FIG. 6.3 may terminate thereafter.

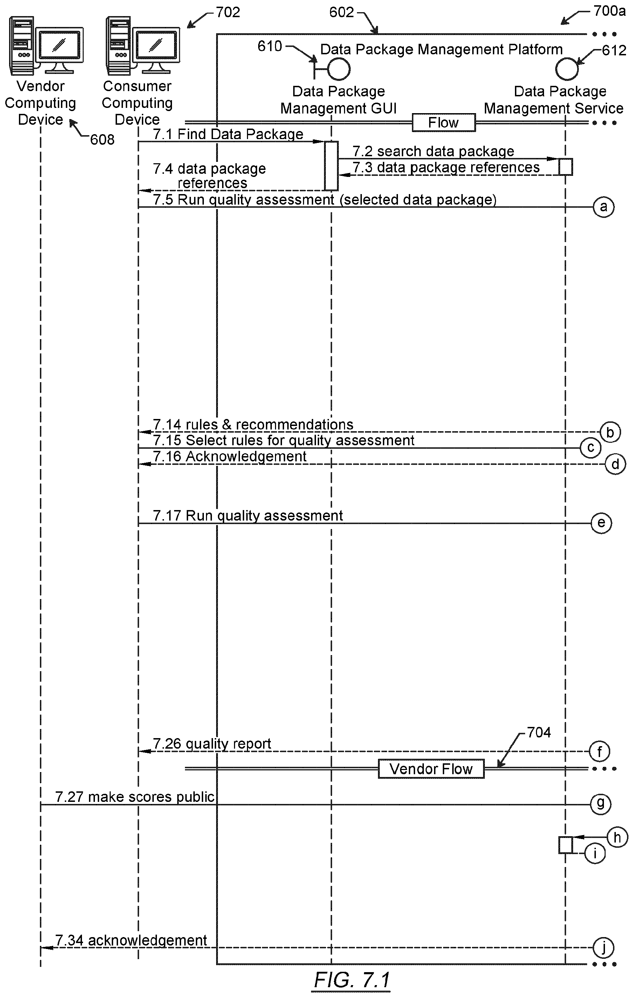

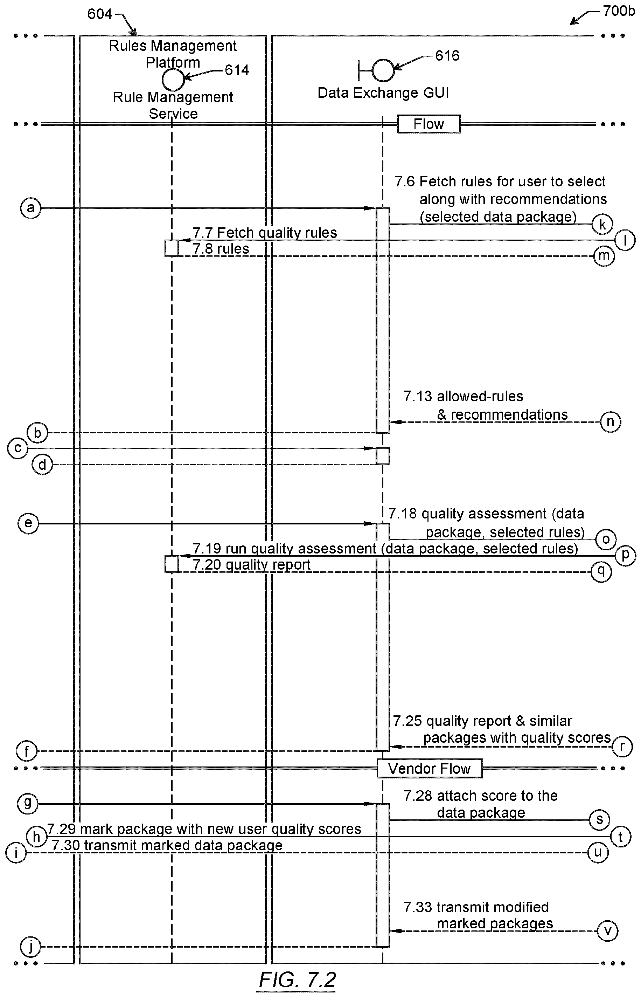

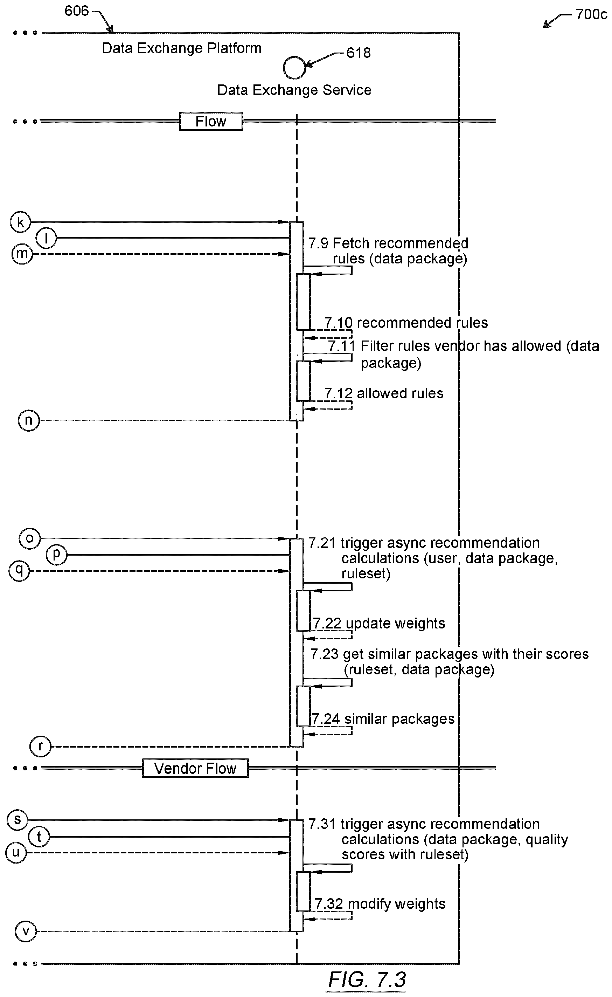

Attention is now turned to data flow architecture (700) in FIG. 7.1 through FIG. 7.3. The architecture of FIG. 7.1 through FIG. 7.3 is similar to the architecture shown in FIG. 6.1 through FIG. 6.3. Thus, FIG. 6.1 through FIG. 6.3, and FIG. 7.1 through FIG. 7.3, share common reference numerals. For example, the data flow architecture (700) includes three platforms, including data package management platform (602), rules management platform (604), and data exchange platform (606). However, in FIG. 7.1 through FIG. 7.3, the data flow is different, and in particular relates to consumers finding data packages. Thus, a consumer computing device (702) is added to data flow architecture (700) shown in FIG. 7.1 through FIG. 7.3.

At 7.1, the consumer computing device (702) issues a request to the data package management GUI (610) to find a data package. At 7.2, the data package management GUI (610) then transmits a command to the data package management service (612) to search the data packages available. At 7.3, the data package management service (612) returns one or more data package references to the data package management GUI (610). In turn, at 7.4, the data package management GUI (610) returns the one or more data package references to the consumer computing device (702).

At 7.5, the consumer computing device (702) then transmits to the data exchange GUI (616) of the data exchange platform (606) a request to run a quality assessment on one or more selected data packages. At 7.6, the data exchange GUI (616) transmits a request to the data exchange service (618) to fetch rules from which the user may select, along with recommendations, with respect to the one or more selected data package. At 7.7, the data exchange service (618) transmits the fetch request to the rule management service (614) of the rules management platform (604).

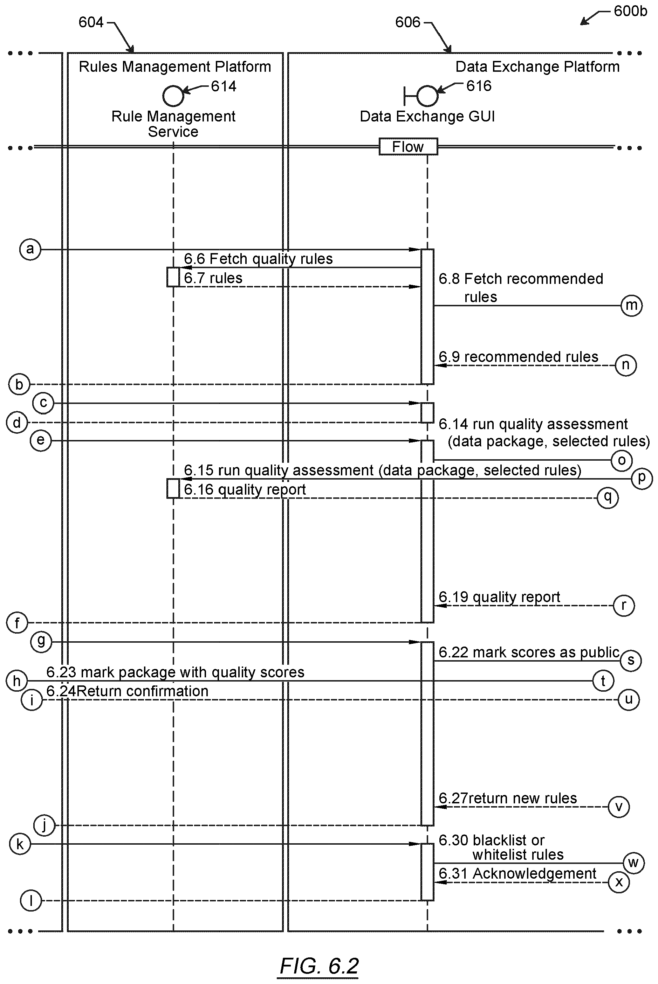

At 7.8, the rule management service (614) then transmits the one or more rules requested to the data exchange service (618). At 7.9, the data exchange service (618) fetches the recommended rules, in a manner similar to step 6.8 in FIG. 6.2. At 7.10, the data exchange service (618) generates the recommended rule set. At 7.11, the data exchange service (618) may filter the rules to remove rules that the vendor has allowed or disallowed. At 7.12, the allowed rules are generated by the data exchange service (618). At 7.13, the data exchange service (618) transmits the allowed rules, and recommendations if appropriate, to the data exchange GUI (616).

At 7.14, the data exchange GUI (616) returns the allowed rules, and/or the recommendations, to the consumer computing device (702). At 7.15, the consumer computing device (702) returns to the data exchange GUI (616) user-rules selected for performing a quality assessment on the one or more data packages. At 7.16, the data exchange GUI (616) transmits an acknowledgement of the selection to the consumer computing device (702).

At this point, the data exchange GUI (616) may perform other optional steps. For example, the data exchange GUI (616) may ask the consumer computing device (702) for permission to share the ruleset with the vendor computing device (608). Alternatively, or in addition, the vendor computing device (608) may have already given the data exchange platform (606) permission to run one or more of the rules on the data package. The continuing flow after step 7.16 continues with the assumption that the data exchange platform (606) has received the permission from the vendor computing device (608) to run the quality rules selected by the consumer computing device (702).

At 7.17, the consumer computing device (702) requests execution of the quality assessment. The request is transmitted to the data exchange GUI (616) on the data exchange platform (606). At step 7.18, the data exchange GUI (616) issues a command to the data exchange service (618) to run the quality assessment. At 7.19, the data exchange service (618) then issues a command to the rule management service (614) on the rules management platform (604) to execute the one or more user-selected rules on the one or more selected data packages.

At 7.20, the rule management service (614) executes the rules to generate one or more quality scores that take the form of a quality report, which the rule management service (614) transmits to the data exchange GUI (616). At 7.21, the data exchange service (618) may perform one or more asynchronous recommendation calculations, as described with respect to FIG. 6.1 through FIG. 6.3. At 7.22, the data exchange platform (606) may update the weights for various combinations of user identifier, data package types, and the selected rules. At 7.23, the data exchange service (618) may retrieve similar data packages, different than the selected data package, as additional data packages in which the consumer may be interested. At 7.24, the data exchange service (618) may retrieve identifiers and descriptions of the similar data packages.

At 7.25, the data exchange service (618) transmits the quality report and the identifiers and descriptions of the similar data packages to the data exchange GUI (616). In turn, the data exchange GUI (616) returns the quality report and the identifiers and descriptions of the similar data packages to the consumer computing device (702).

At this point, as indicated by separator line (704), the system may share the quality report and/or the identifiers and descriptions of the similar data packages with the vendor computing device (608). The flow continues with the assumption that the data exchange platform (606) has received permission from the vendor computing device (608) to associate the one or more quality scores in the quality report with the corresponding one or more data packages.

At 7.27, the vendor computing device (608) may make the one or more quality scores public by issuing a command to the data exchange GUI (616) of the data exchange platform (606). At 7.28, the data exchange GUI (616) issues a command to the data exchange service (618) to attach (or otherwise associate) the one or more quality scores to the one or more data packages. At 7.29, data exchange service (618) transmits the command to the data package management service (612), which then executes the command to generate one or more marked data packages.

At 7.30, the data package management service (612) transmits the one or more marked data packages to the data exchange service (618). At 7.31, the data exchange service (618) may trigger asynchronous recommendation calculations, as described with respect to FIG. 6.1 through FIG. 6.3. At 7.32, the data exchange service (618) may increase or otherwise modify the weights for the rules, because the vendor computing device (608) has endorsed the selected one or more rules used to generate the one or more quality scores.

At 7.33, the data exchange service (618) transmits the modified marked rules to the data exchange GUI (616), which then may be stored and referenced by the data package management platform (602). At 7.34, the data exchange GUI (616) then transmits an acknowledgement to the vendor computing device (608). The data flow of FIG. 7.1 through FIG. 7.3 may terminate thereafter.

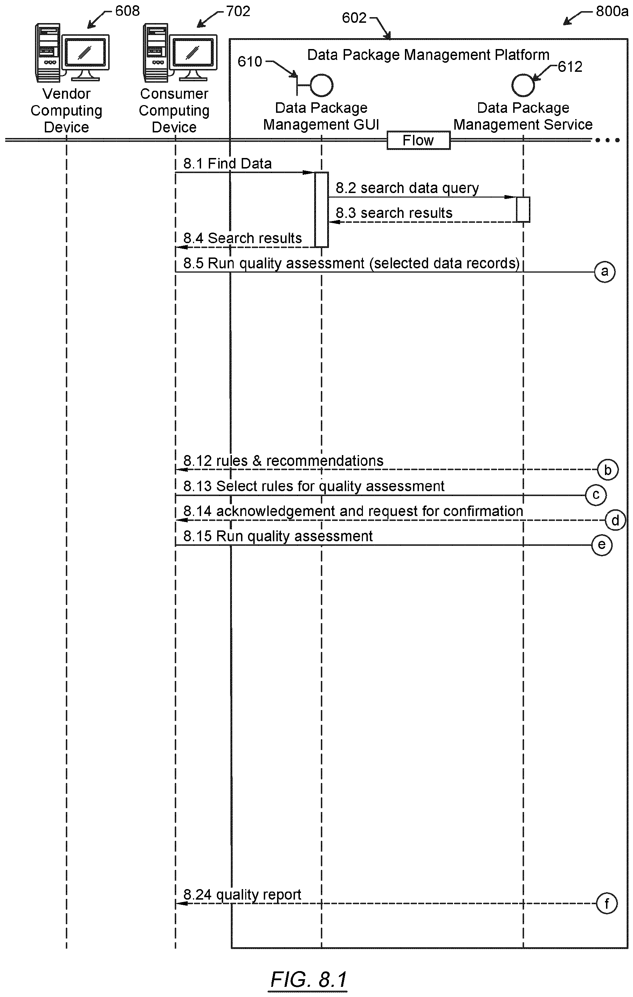

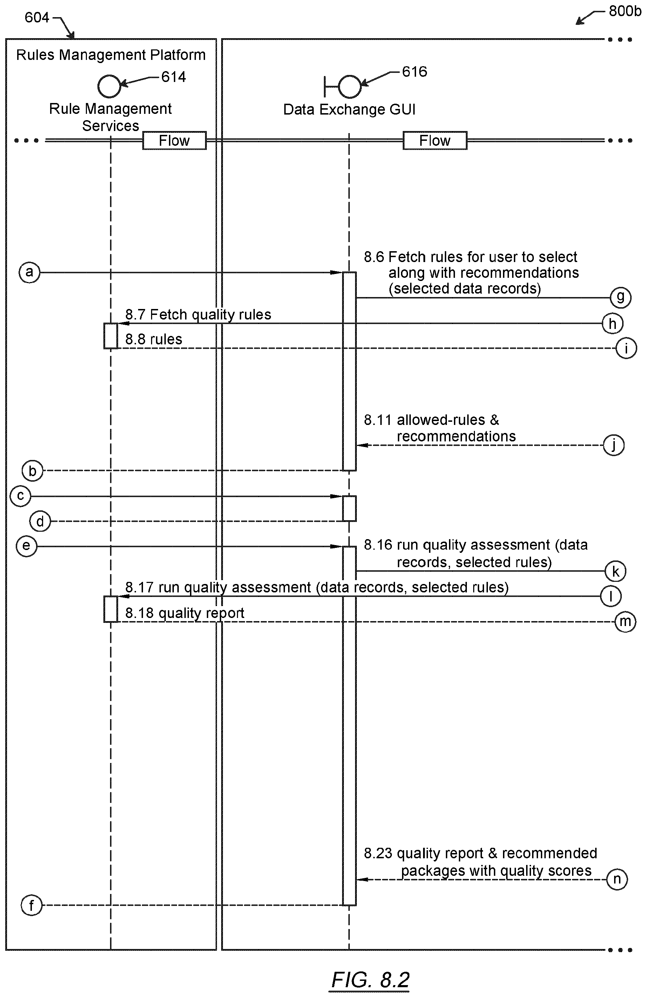

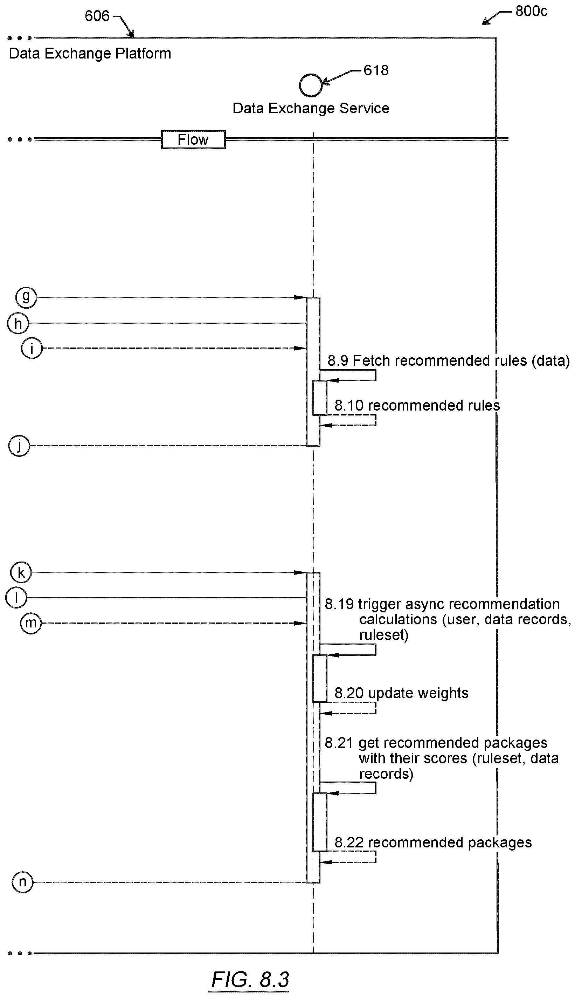

Attention is now turned to data flow architecture (800) in FIG. 8.1 through FIG. 8.3. The architecture of FIG. 8.1 through FIG. 8.3 is similar to the architecture shown in FIG. 6.1 through FIG. 6.3, and FIG. 7.1 through FIG. 7.3. Thus, FIG. 6.1 through FIG. 8.3 share common reference numerals. For example, the data flow architecture (800) includes three platforms, including data package management platform (602), rules management platform (604), and data exchange platform (606). However, in FIG. 8.1 through FIG. 8.3, the data flow is different, and in particular relates to consumers searching for data packages in the data exchange platform (606). Thus, reference is still made in FIG. 8.1 through FIG. 8.3 to the consumer computing device (702) described in FIG. 7.1 through FIG. 7.3.

At 8.1, the consumer computing device (702) issues a command to the data package management GUI (610) to find data packages. At 8.2, the data package management GUI (610) issues a command to perform a data query to the data package management service (612). At 8.3, the data package management service (612) then executes the search command and returns the search results to the data package management GUI (610). At 8.4, the data package management GUI (610) returns the search results to the consumer computing device (702).

At 8.5, the consumer computing device (702) issues a command to the data exchange GUI (616) to run a quality assessment on a selected data record. At 8.6, the data exchange GUI (616) issues a command to fetch rules from which the user may select, along with possibly a command to generate recommendations to the user for non-user-selected data packages (e.g., data packages which may be of interest to the user, but which were not reported in the search results).

At 8.7, the data exchange service (618) issues a command to the rule management service (614) of the rules management platform (604) to fetch the quality rules. At 8.8, the rules are returned to the data exchange service (618).

At 8.9, the data exchange service (618) fetches the rules. At 8.10, the data exchange service (618) generates a list of recommended rules. At 8.11, the data exchange service (618) transmits to the data exchange GUI (616) a list of rules that match the recommend rules and that are allowed by the vendor computing device (608). At 8.12, the available rules and recommendations for rules are returned to the consumer computing device (702).

At 8.13, the user selects one or more rules, and the consumer computing device (702) transmits the selected rules to the data exchange GUI (616). At 8.14, the data exchange GUI (616) returns an acknowledgement and a request for confirmation.

At 8.15, the consumer computing device (702) transmits a command to the data exchange GUI (616) to run or execute the quality assessment with the selected rules. At 8.16, the data exchange GUI (616) transmits the command to execute the rules to the data exchange service (618). The data exchange service (618) then returns the command to the rule management service (614) on the rules management platform (604). The rule management service (614) executes the selected rules and generates a quality report.

At 8.18, the rule management service (614) transmits the quality report to the data exchange service (618). At 8.19, asynchronous recommendation calculations are triggered, as described with respect to FIG. 6.1 through FIG. 6.3. At 8.20, the data exchange platform (606) may update the weights for the various combinations of users, data records, and rules to improve future recommendations for rules. At 8.21, the data exchange service (618) issues a command to identify recommended data packages, which were not exposed at the search query at step 8.2. At step 8.22, the data exchange service (618) generates a list of recommended data package summaries and identifiers.

At 8.23, the quality report and recommended data package summaries and identifiers are returned to the data exchange GUI (616). The data exchange GUI (616) then returns the quality report and recommended data package summaries and identifiers to the consumer computing device (702). The data flow of FIG. 8.1 through FIG. 8.3 may terminate thereafter.

FIG. 9 shows a table (900) of weights applied to rules. In an embodiments, the weights may be used to recommend rules to the user by weighting the rules according to one or more parameters. The parameters may include the number of times the particular user has requested execution of a rule, the number of times all users or similar users have requested execution of a rule, the type of rules run by other users on a given data package, and the rules the particular user has run on other data packages (unrelated to a selected data package currently under consideration). Other parameters may be used.

The user may be told, without breaching privacy considerations, which rules are commonly associated with a selected data package. In this manner, the user may be prompted to select one or more of the recommend rules instead of, or perhaps in addition to, rules already selected by the user. A similar technique may be used when a user does not know which rules may be best to execute on a data package in order to generate a meaningful quality score.

In the example of FIG. 9, an initial quality score is generated by a vendor executing a combination of rules "a", "b", and "c" on a data package. The initial quality score generated is 100% representing a fact that the data package in question fully satisfies all three rules. Later, a consumer decides to perform a second quality score assessment by selecting rules "a", "p", "q", and "r". The selected rules are executed on the data package, and the returned result is 75%. In other words, one of the rules failed. Optionally, the quality score may indicate that a specific rule, say rule "p", failed when run on the data package. At this point, the data package has two quality scores, the first, vendor-endorsed, quality score of 100% (for rules "a", "b", and "c"), and the second, customer-generated, quality score of 75% (for rules "a, "p", "q", and "r").

A second customer now performs a third quality analysis, selecting rules "a", "b", "q", and "r". The third quality score is 100%.

Assuming the vendor approved the scores for user 1 and user 2, FIG. 9 shows the weights indicated for each rule. Rules that are used less frequently receive less weight, and thus will be suggested less often by the data exchange platform.

The table (900) of FIG. 9 also may be used to illustrate an example of asynchronous recommendation calculations, as mentioned with respect to FIG. 6.1 through FIG. 6.3. The columns (e.g., "Vendor endorsed," "User 1's assessment," *etc.)* may be viewed as a timeline that begins in the "Vendor endorsed" column and proceeds in sequential time increments from column to column. Each time an event in the sequence occurs (*e.g.,* the vendor endorsed the rule, user 1 assessed a rule, *etc.),* an asynchronous recommendation calculation has taken place. Because the events represented by the columns do not take place concurrently, the events are "asynchronous." Over time, the accumulation of events may be used to increasingly improve the calculation of a subsequent recommendations by adjusting the weights (as described above) based on the results of events that took place earlier in the time sequence.

Attention is now turned to FIG. 10. FIG. 10 is an example of a user interface for a network data security system, in accordance with one or more embodiments. Thus, for example, FIG. 10 may be an example of a graphical user interface (GUI) presented to a user, such as a consumer computing system or a vendor computing system. The remote user interface (1000) is particularly configured for a consumer computing system, such as the consumer computing device (702) in FIG. 7.1 through FIG. 7.3 and FIG. 8.1 through FIG. 8.3. The remote user interface (1000) may be generated by the data exchange platform (606) in FIG. 6.1 through FIG. 8.3 and displayed on one or more of the remote user devices (150) in FIG. 1.

The example of FIG. 10 is a simplified example for clarity of presentation. It is contemplated that a data exchange platform will have a multitude (hundreds, thousands, or more) of available data packages and quality assessment rules.

The remote user interface (1000) shows a list of available data packages (1002). One or more instructions may be printed along with the list, such as "select one more packages." The packages shown, "seismic data site A" data package (1004), "production data site A" data package (1006), and "solar cell efficiency site A" data package (1008) all relate to data taken at an energy production site that generates both solar energy and pumps water and/or oil from the ground. Each one of the packages is shown as an interactive widget (*e.g.,* a button, drop down menu, *etc.)* on the remote user interface (1000) with which a user may interact in order to select.

The remote user interface (1000) similarly shows a number of available rules (1010), together with instructions to "select one or more rules." The available rules include a "seismic precision rule" (1012), a "production type rule" (1014), and a "solar cell type rule (1016). Each rule is displayed as a widget so that the user may select a rule for use. A drop-down menu or some other display element (not shown) may be used to provide a description for a rule. Thus, for example, the seismic precision rule (1012) may determine whether the seismic data in the "seismic data site A" data package (1004) package contains data that meets a minimum precision of measurement.

In an embodiment, a rule may be configurable. For example, another widget (not shown) associated with a rule may allow a user to specify some parameter of the rule. For example, continuing the above example, by selecting a configuration widget for the "seismic precision rule" (1012), a user may specify the number of decimal places as a measurement of the user's desired precision for the data.

The remote user interface (1000) may also be presented with additional widgets for additional functionality. For example, the remote user interface (1000) may include a "create new rule" widget (1018). The "create new rule" widget (1018) may be selected, which then prompts the data exchange platform to display a new GUI (not shown) which provides the user the ability to create new rules for execution on the available data packages (1002).

The remote user interface (1000) also displays an "execute rules!" widget (1020). The "execute rules!" widget (1020) causes the data exchange platform to execute the one or more rules selected in the available rules (1010) on the one or more data packages selected from the available data packages (1002). The rules may be executed as described with respect to FIG. 2 through FIG. 8.3 using the system of FIG. 1.

The remote user interface (1000) also shows a results window (1022). The results window (1022) shows a list of data packages, a list of rules applied to each data package in question, and a list of quality scores for each data package. The ellipses show that multiple entries may be presented for each column.

The remote user interface (1000) also shows a "request access to data package(s)" widget (1024). The "request access to data package(s)" widget (1024) causes the data exchange platform to transmit a request to the vendor computer system, or to some automated process managed by the data exchange platform. Possibly another GUI (not shown) may be presented to the user so that the user may select the specific data packages desired, and then enter the information necessary to gain access to the desired data packages.

For example, the user might indicate, using the additional GUI, that the user wishes to purchase access to the "seismic data site A" data package (1004). The additional GUI may prompt the user for a password, a payment authorization, or some other information or action required by the vendor in order for the vendor to grant access to the "seismic data package A" data package (1004). A message may be presented on the remote user interface (1000), or some other GUI, that access has been granted or denied.

In the example of FIG. 10, access to the "seismic data site A" data package (1004) has been granted. However, the consumer does not have access to the "seismic data site A" data package (1004) directly. In other words, the user is still not allowed to access or download the data directly. However, the user is now permitted to select the "open data package analyzer" widget (1026). Because the user has been granted access to the "seismic data site A" data package (1004), when the user selects the "open data package analyzer" widget (1026), the user is given the option of selecting the "seismic data site A" data package (1004) for analysis. The user may then generate useful analysis data, based on the output of the "open data package analyzer" widget (1026) having been executed on the "seismic data site A" data package (1004).

However, in still another embodiment, the consumer could have been granted direct access to the "seismic data site A" data package (1004). Thus, in the alternative embodiment, the user could view or possibly download the "seismic data site A" data package (1004). Still other variations are possible.

FIG. 11. 1 and FIG. 11.2 are examples of a computing system and a network, in accordance with one or more embodiments. The one or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure. For example, as shown in FIG. 11.1, the computing system (1100) may include one or more computer processor(s) (1102), non-persistent storage device(s) (1104) (e.g., volatile memory, such as random access memory (RAM), cache memory), persistent storage device(s) (1106) (e.g., a hard disk, an optical drive such as a compact disk (CD) drive or digital versatile disk (DVD) drive, a flash memory, etc.), a communication interface (1108) (e.g., Bluetooth interface, infrared interface, network interface, optical interface, etc.), and numerous other elements and functionalities that implement the features and elements of the disclosure.

The computer processor(s) (1102) may be an integrated circuit for processing instructions. For example, the computer processor(s) (1102) may be one or more cores or micro-cores of a processor. The computing system (1100) may also include one or more input device(s) (1111), such as a touchscreen, a keyboard, a mouse, a microphone, a touchpad, an electronic pen, or any other type of input device.

The communication interface (1108) may include an integrated circuit for connecting the computing system (1100) to a network (not shown) (e.g., a local area network (LAN), a wide area network (WAN) such as the Internet, a mobile network, or any other type of network) and/or to another device, such as another computing device.

Further, the computing system (1100) may include one or more output device(s) (1112), such as a screen (e.g., a liquid crystal display (LCD), a plasma display, a touchscreen, a cathode ray tube (CRT) monitor, a projector, or other display device), a printer, an external storage, or any other output device. One or more of the output device(s) (1112) may be the same or different from the input device(s) (1111). The input and output device(s) (1111 and 1112) may be locally or remotely connected to the computer processor(s) (1102), the non-persistent storage device(s) (1104), and the persistent storage device(s) (1106). Many different types of computing systems exist, and the aforementioned input and output device(s) (1111 and 1112) may take other forms.

Software instructions in the form of computer readable program code to perform the one or more embodiments may be stored, in whole or in part, temporarily or permanently, on a non-transitory computer readable medium such as a CD, a DVD, a storage device, a diskette, a tape, flash memory, physical memory, or any other computer readable storage medium. Specifically, the software instructions may correspond to computer readable program code that, when executed by a processor(s), is configured to perform the one or more embodiments.

The computing system (1100) in FIG. 11.1 may be connected to or be a part of a network. For example, as shown in FIG. 11.2, the network (1120) may include multiple nodes (e.g., node X (1122), node Y (1124)). Each node may correspond to a computing system, such as the computing system (1100) shown in FIG. 11.1, or a group of nodes combined may correspond to the computing system (1100) shown in FIG. 11.1. By way of an example, the one or more embodiments may be implemented on a node of a distributed system that is connected to other nodes. By way of another example, the one or more embodiments may be implemented on a distributed computing system having multiple nodes, where each portion of the one or more embodiments may be located on a different node within the distributed computing system. Further, one or more elements of the aforementioned computing system (1100) may be located at a remote location and connected to the other elements over a network.

Although not shown in FIG. 11.2, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (1122), node Y (1124)) in the network (1120) may be configured to provide services for a client device (1126). For example, the nodes may be part of a cloud computing system. The nodes may include functionality to receive requests from the client device (1126) and transmit responses to the client device (1126). The client device (1126) may be a computing system, such as the computing system (1100) shown in FIG. 11.1. Further, the client device (1126) may include and/or perform all or a portion of the one or more embodiments.

The computing system (1100) or group of computing systems described in FIG. 11.1 and FIG. 11.2 may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (e.g., a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

The computing system performing the one or more embodiments may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments of the one or more embodiments, may extract one or more data items from the obtained data. For example, the extraction may be performed as follows by the computing system (1100) in FIG. 11.1. First, the organizing pattern (e.g., grammar, schema, layout) of the data is determined, which may be based on one or more of the following: position (e.g., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/value-based data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as eXtensible Markup Language (XML)).

The extracted data may be used for further processing by the computing system. For example, the computing system (1100) of FIG. 11.1, while performing the one or more embodiments, may perform data comparison. Data comparison may be used to compare two or more data values (e.g., A, B). For example, one or more embodiments may determine whether A > B, A = B, A != B, A < B, etc. The comparison may be performed by submitting A, B, and an opcode specifying an operation related to the comparison into an arithmetic logic unit (ALU) (i.e., circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, etc. By selecting the proper opcode and then reading the numerical results and/or status flags, the comparison may be executed. For example, in order to determine if A > B, B may be subtracted from A (i.e., A - B), and the status flags may be read to determine if the result is positive (i.e., if A > B, then A - B > 0). In one or more embodiments, B may be considered a threshold, and A is deemed to satisfy the threshold if A = B or if A > B, as determined using the ALU. In one or more embodiments, A and B may be vectors, and comparing A with B requires comparing the first element of vector A with the first element of vector B, the second element of vector A with the second element of vector B, etc. In one or more embodiments, if A and B are strings, the binary values of the strings may be compared.

The computing system (1100) in FIG. 11.1 may implement and/or be connected to a data repository, such as the data repository (100) in FIG. 1. For example, one type of data repository is a database. A database is a collection of information configured for ease of data retrieval, modification, re-organization, and deletion. Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, data containers (a database, a table, a record, a column, a view, etc.), identifiers, conditions (comparison operators), functions (e.g. join, full join, count, average, etc.), sorts (e.g. ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system (1100) of FIG. 11.1 may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents only a few examples of functions performed by the computing system (1100) of FIG. 11.1 and the nodes (e.g., node X (1122), node Y (1124)) and/or client device (1126) in FIG. 11.2. Other functions may be performed using one or more embodiments.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

As used herein, the terms "connected to" or "in communication with" contemplate multiple meanings. A connection or communication may be direct or indirect. For example, computer A may be directly connected to, or communicate with, computer B by means of a direct communication link. Computer A may be indirectly connected to, or communicate with, computer B by means of a common network environment to which both computers are connected. A connection or communication may be wired or wireless. A or connection or communication may be temporary, permanent, or semi-permanent communication channel between two entities.

While the one or more embodiments have been described with respect to a limited number of embodiments, those skilled in the art, having benefit of this disclosure, will appreciate that other embodiments can be devised which do not depart from the scope of the one or more embodiments as disclosed herein. Accordingly, the scope of the one or more embodiments should be limited only by the attached claims.

## Claims

1. A method comprising:
receiving (200) a request, via a network (148) and from a remote user (150) unauthorized to access a data package (102), for a quality score (118) of the data package (102), wherein a metric (110) for evaluating the quality score (118) is defined by the remote user (150);
receiving (202) a rule (114), wherein the rule (114) is programmed to use, as input, the data package (102) and generate, as output, the quality score (118), and wherein the rule (114) is specified at least in part based on the metric (110);
generating (204) the quality score (120) by executing the rule (114) on the data package (102); and
transmitting (206), via the network, the quality score (118) and a description (106) of the data package (102) while blocking access by the remote user to the data package (102).

2. The method of claim 1, further comprising:
receiving additional data (124) from the remote user (150); and
generating, by a rule selector, a suggested rule (122), wherein rule selector uses, as input, the additional data (124) and a plurality of pre-generated rules (116) and generates, as output, the suggested rule (122),
wherein receiving the rule (114) comprises receiving the suggested rule (122).

3. The method of claim 1 or 2, wherein receiving the rule (114) comprises:
receiving, from the remote user, a selection of a selected rule (122) from among a plurality of pre-prepared rules (116), and/or
presenting, to the remote user (150), a rules generation interface;
receiving a user-generated rule via the rules generation interface;
verifying that the user-generated rule is both valid and avoids granting, to the remote user, access to the data package (102); and
granting permission to use the user-generated rule to generate the quality score (118),
wherein receiving the rule (114) comprises receiving the user-generated rule.

4. The method of claim 3, further comprising:
adding the user-generated rule to a set of pre-generated rules.

5. The method of claim 4, further comprising:
receiving a second request, via the network and from the remote user, for a second quality score of a second data package, wherein a second metric for evaluating the second quality score is defined by the remote user;
receiving the user-generated rule, wherein the user-generated rule is programmed to use, as input, the second data package and generate, as output, the second quality score, and wherein the user-generated rule is specified by the remote user;
generating the second quality score (118) by executing the user-generated rule on the second data package (102);
transmitting, via the network (148), the second quality score and a second description of the second data package (102) while blocking access by the remote user to the data package (102), and/or
further comprising:
suggesting the user-generated rule to a second user in response to a second request for a second quality score received from the second user, different than the remote user.

6. The method of any one of the preceding claims, further comprising:
selecting, based on at least one of the rule (114) and the data package (102), a second data package (102) from among a plurality of additional data packages;
generating a second quality score (118) by executing the rule (114) on the second data package (102);
transmitting, via the network (148), the second quality score (118) and a description (106) of the second data package (102) while blocking access by the remote user to the second data package (102).

7. The method of claim 1, further comprising, weighting, prior to generating the quality score, the rule.

8. The method of any one of the preceding claims, wherein receiving the rule (114) comprises:
receiving a plurality of rules (116), wherein generating the quality score (118) comprises executing the plurality of rules (116) on the data package (102), and
wherein generating the quality score (118) further comprises:
combining outputs of the plurality of rules (116); and,
weighting, prior to generating the quality score (118), one or more of the plurality of rules (116);
wherein weighting is performed based on one or more of a vendor endorsement of a prior selection of rules (114) previously executed on the data package (102), a second remote user's endorsement of a prior selection of rules (114) previously executed on the data package (102), and a second remote user's endorsement of the data package (102).

9. The method of any one of the preceding claims, further comprising:
receiving (210), from a vendor, authorization granting the remote user (150) access to the data package (102); and
granting (214), to the remote user (150), access to the data package (102).

10. The method of claim 9, wherein granting access to the data package (102) comprises:
permitting the remote user (150) to generate output data by granting permission to the remote user (150) to use a data analysis controller (144) controlled by the vendor to analyze the data package (102), while preventing the remote user from directly accessing the data package (102), wherein the data analysis controller (144) generates the output data.

11. The method of any one of the preceding claims, wherein the data package (102) comprises at least one of exploration and production data relating to a wellbore site and alternative energy data relating to an alternative energy production site.

12. A system comprising:
a processor (1102);
a network interface (146) in communication with the processor (1102), the network interface (146) programmed to receive a request, over a computer network (148), for a quality score (118) of a data package (102);
a non-transitory computer readable storage medium (1106) in communication with the processor (1102), the non-transitory computer readable storage medium (1106) storing:
the data package (102),
a selected rule (122) programmed to use, as input, the data package (102) and generate, as output, the quality score (118),
a description (106) of the data package (102),
a metric (110) received from a remote user initially unauthorized to access the data package (102), and
the quality score (118);
a quality score controller (140) programmed to:
select the selected rule (122) based on the metric (110);
generate the quality score (118) by executing the selected rule (122) on the data package (102; and
a data security controller (142) programmed to:
transmit, via the network interface (146), the quality score (118) and the description (106) of the data package (102), and
block access by the remote user to the data package (102).

13. The system of claim 12 further comprising:
a data analysis controller (144) in communication with the network interface (146) and programmed to:
receive authorization from a vendor to grant access to the data package (102); and
grant access to the data package (102) by permitting the remote user to analyze the data package (102) using the data analysis controller (144), while preventing the remote user from directly accessing the data package (102).

14. The system of claim 12 or 13, wherein the metric (110) comprises at least one of: a data type, a data format, a source of data, a data precision value, and combinations thereof, and wherein the quality score controller (140) is further programmed to:
execute a selection rule to determine the selected rule (122), wherein the selection rule uses, as input, the metric (110) and generates, as output, the selected rule (122), and/or wherein the selected rule (122) comprises a plurality of rules (116), and
wherein generating the quality score (118) comprises combining outputs of the plurality of rules (116).

## Patentansprüche

1. Verfahren, umfassend:
Empfangen (200) einer Anforderung, über ein Netzwerk (148) und von einem Remote-Benutzer (150), der nicht zum Zugriff auf ein Datenpaket (102) berechtigt ist, eines Qualitätsfaktors (118) des Datenpakets (102), wobei durch den Remote-Benutzer (150) eine Metrik (110) zum Bewerten des Qualitätsfaktors (118) definiert wird;
Empfangen (202) einer Regel (114), wobei die Regel (114) dazu programmiert ist, als Eingabe das Datenpaket (102) zu verwenden und als Ausgabe den Qualitätsfaktor (118) zu generieren, und wobei die Regel (114) wenigstens teilweise basierend auf der Metrik (110) spezifiziert wird;
Generieren (204) des Qualitätsfaktors (120) durch Ausführen der Regel (114) am Datenpaket (102); und
Übertragen (206) des Qualitätsfaktors (118) und einer Beschreibung (106) des Datenpakets (102) über das Netzwerk bei gleichzeitigem Blockieren des Zugriffs des Remote-Benutzers auf das Datenpaket (102).

2. Verfahren nach Anspruch 1, ferner umfassend:
Empfangen weiterer Daten (124) vom Remote-Benutzer (150); und
Generieren einer vorgeschlagenen Regel (122) durch einen Regelselektor, wobei der Regelselektor als Eingabe die weiteren Daten (124) und mehrere vorgenerierte Regeln (116) verwendet und als Ausgabe die vorgeschlagene Regel (122) generiert,
wobei das Empfangen der Regel (114) das Empfangen der vorgeschlagenen Regel (122) umfasst.

3. Verfahren nach Anspruch 1 oder 2, wobei das Empfangen der Regel (114) umfasst:
Empfangen einer Auswahl einer ausgewählten Regel (122) aus mehreren vorab vorbereiteten Regeln (116) vom Remote-Benutzer, und/oder
Präsentieren einer Regelgenerierungsschnittstelle für den Remote-Benutzer (150);
Empfangen einer benutzergenerierten Regel über die Regelgenerierungsschnittstelle;
Überprüfen, dass die benutzergenerierte Regel sowohl gültig ist als auch dem Remote-Benutzer keinen Zugriff auf das Datenpaket (102) gewährt; und
Erteilen der Erlaubnis, die benutzergenerierte Regel zum Generieren des Qualitätsfaktors (118) zu verwenden,
wobei das Empfangen der Regel (114) das Empfangen der benutzergenerierten Regel umfasst.

4. Verfahren nach Anspruch 3, ferner umfassend:
Hinzufügen der benutzergenerierten Regel zu einem Satz vorgenerierter Regeln.

5. Verfahren nach Anspruch 4, ferner umfassend:
Empfangen einer zweiten Anforderung, über das Netzwerk und vom Remote-Benutzer, eines zweiten Qualitätsfaktors eines zweiten Datenpakets, wobei durch den Remote-Benutzer eine zweite Metrik zum Bewerten des zweiten Qualitätsfaktors definiert wird;
Empfangen der benutzergenerierten Regel, wobei die benutzergenerierte Regel dazu programmiert ist, als Eingabe das zweite Datenpaket zu verwenden und als Ausgabe den zweiten Qualitätsfaktor zu generieren, und wobei die benutzergenerierte Regel durch den Remote-Benutzer spezifiziert wird;
Generieren des zweiten Qualitätsfaktors (118) durch Ausführen der benutzergenerierten Regel am zweiten Datenpaket (102);
Übertragen des zweiten Qualitätsfaktors und einer zweiten Beschreibung des zweiten Datenpakets (102) über das Netzwerk (148) bei gleichzeitigem Blockieren des Zugriffs des Remote-Benutzers auf das Datenpaket (102), und/oder
ferner umfassend:
Vorschlagen der benutzergenerierten Regel an einen zweiten Benutzer als Reaktion auf eine vom zweiten Benutzer, der vom Remote-Benutzer verschieden ist, empfangene zweite Anforderung eines zweiten Qualitätsfaktors.

6. Verfahren nach einem der vorhergehenden Ansprüche, ferner umfassend:
Auswählen eines zweiten Datenpakets (102) aus mehreren weiteren Datenpaketen basierend auf wenigstens einem aus der Regel (114) und dem Datenpaket (102);
Generieren eines zweiten Qualitätsfaktors (118) durch Ausführen der Regel (114) am zweiten Datenpaket (102),
Übertragen des zweiten Qualitätsfaktors (118) und einer Beschreibung (106) des zweiten Datenpakets (102) über das Netzwerk (148) bei gleichzeitigem Blockieren des Zugriffs des Remote-Benutzers auf das zweite Datenpaket (102).

7. Verfahren nach Anspruch 1, ferner umfassend Gewichten der Regel vor dem Generieren des Qualitätsfaktors.

8. Verfahren gemäß einem der vorhergehenden Ansprüche, wobei das Empfangen der Regel (114) umfasst:
Empfangen mehrerer Regeln (116), wobei das Generieren des Qualitätsfaktors (118) umfasst, die mehreren Regeln (116) am Datenpaket (102) auszuführen, und
wobei das Generieren des Qualitätsfaktors (118) ferner umfasst:
Kombinieren von Ausgaben der mehreren Regeln (116); und
Gewichten einer oder mehrerer der mehreren Regeln (116) vor dem Generieren des Qualitätsfaktors (118);
wobei das Gewichten basierend auf einem oder mehreren aus einer Gutheißung einer zuvor am Datenpaket (102) ausgeführten vorherigen Auswahl von Regeln (114) durch einen Anbieter, einer Gutheißung einer zuvor am Datenpaket (102) ausgeführten vorherigen Auswahl von Regeln (114) durch einen zweiten Remote-Benutzer, und einer Gutheißung des Datenpakets (102) durch einen zweiten Remote-Benutzer durchgeführt wird.

9. Verfahren nach einem der vorhergehenden Ansprüche, ferner umfassend:
Empfangen (210) einer Autorisierung, die dem Remote-Benutzer (150) Zugriff auf das Datenpaket (102) gewährt, von einem Anbieter, und
Gewähren (214) des Zugriffs auf das Datenpaket (102) an den Remote-Benutzer (150).

10. Verfahren nach Anspruch 9, wobei das Gewähren des Zugriffs auf das Datenpaket (102) umfasst:
Erteilen der Erlaubnis an den Remote-Benutzer (150), Ausgabedaten zu generieren, indem dem Remote-Benutzer (150) die Erlaubnis erteilt wird, einen vom Anbieter gesteuerten Datenanalyse-Controller (144) zu verwenden, um das Datenpaket (102) zu analysieren, und gleichzeitig verhindert wird, dass der Remote-Benutzer direkt auf das Datenpaket (102) zugreift, wobei der Datenanalyse-Controller (144) die Ausgabedaten generiert.

11. Verfahren nach einem der vorhergehenden Ansprüche, wobei das Datenpaket (102) wenigstens eines umfasst aus Erkundungs- und Produktionsdaten in Bezug auf einen Bohrstandort und Alternativenergiedaten in Bezug auf einen Alternativenergie-Produktionsstandort.

12. System, umfassend:
einen Prozessor (1102);
eine Netzschnittstelle (146) in Kommunikation mit dem Prozessor (1102), wobei die Netzschnittstelle (146) dazu programmiert ist, eine Anforderung eines Qualitätsfaktors (118) eines Datenpakets (102) über ein Rechnernetz (148) zu empfangen;
ein nichtflüchtiges rechnerlesbares Speichermedium (1106) in Kommunikation mit dem Prozessor (1102), wobei das nichtflüchtige rechnerlesbare Speichermedium (1106) speichert:
das Datenpaket (102),
eine ausgewählte Regel (122), die dazu programmiert ist, als Eingabe das Datenpaket (102) zu verwenden und als Ausgabe den Qualitätsfaktor (118) zu generieren,
eine Beschreibung (106) des Datenpakets (102),
eine von einem anfangs nicht zum Zugriff auf das Datenpaket (102) berechtigten Remote-Benutzer empfangene Metrik (110), und
den Qualitätsfaktor (118);
einen Qualitätsfaktor-Controller (140), der dazu programmiert ist:
die ausgewählte Regel (122) basierend auf der Metrik (110) auszuwählen;
den Qualitätsfaktor (118) durch Ausführen der ausgewählten Regel (122) am Datenpaket (102) zu generieren; und
einen Datensicherheits-Controller (142), der dazu programmiert ist:
den Qualitätsfaktor (118) und die Beschreibung (106) des Datenpakets (102) über die Netzschnittstelle (146) zu übertragen, und
den Zugriff des Remote-Benutzers auf das Datenpaket (102) zu blockieren.

13. System nach Anspruch 12, ferner umfassend:
einen Datenanalyse-Controller (144) in Kommunikation mit der Netzschnittstelle (146) und dazu programmiert:
eine Autorisierung von einem Anbieter zu empfangen, Zugriff auf das Datenpaket (102) zu gewähren; und
Zugriff auf das Datenpaket (102) zu gewähren, durch Erteilung der Erlaubnis an den Remote-Benutzer, das Datenpaket (102) unter Verwendung des Datenanalyse-Controllers (144) zu analysieren, und gleichzeitig zu verhindern, dass der Remote-Benutzer direkt auf das Datenpaket (102) zugreift.

14. System nach Anspruch 12 oder 13, wobei die Metrik (110) wenigstens eines umfasst aus: einem Datentyp, einem Datenformat, einer Datenquelle, einem Datenpräzisionswert und Kombinationen daraus, und wobei der Qualitätsfaktor-Controller (140) ferner dazu programmiert ist:
eine Auswahlregel auszuführen, um die ausgewählte Regel (122) zu bestimmen, wobei die Auswahlregel als Eingabe die Metrik (110) verwendet und als Ausgabe die ausgewählte Regel (122) generiert, und/oder wobei die ausgewählte Regel (122) mehrere Regeln (116) umfasst, und wobei das Generieren des Qualitätsfaktors (118) umfasst, Ausgaben der mehreren Regeln (116) zu kombinieren.

## Revendications

1. Procédé comprenant :
la réception (200) d'une demande, par l'intermédiaire d'un réseau (148) et d'un utilisateur distant (150) non autorisé à accéder à un paquet de données (102), destiné à une note de qualité (118) du paquet de données (102), dans lequel une métrique (110) destinée à évaluer la note de qualité (118) étant définie par l'utilisateur distant (150) ;
la réception (202) d'une règle (114), dans lequel la règle (114) est programmée pour utiliser, en tant qu'entrée, le paquet de données (102) et générer, en tant que sortie, la note de qualité (118), et dans lequel la règle (114) est spécifiée au moins en partie sur la base de la métrique (110) ;
la génération (204) de la note de qualité (120) par exécution de la règle (114) sur le paquet de données (102) ; et
la transmission (206), par l'intermédiaire du réseau, de la note de qualité (118) et d'une description (106) du paquet de données (102) tout en bloquant l'accès de l'utilisateur distant au paquet de données (102).

2. Procédé selon la revendication 1, comprenant en outre :
la réception de données supplémentaires (124) provenant de l'utilisateur distant (150) ; et
la génération, par un sélecteur de règles, d'une règle suggérée (122), dans lequel le sélecteur de règles utilisant, en tant qu'entrée, les données supplémentaires (124) et une pluralité de règles prégénérées (116) et générant, en tant que sortie, la règle suggérée (122),
dans lequel la réception de la règle (114) comprend la réception de la règle suggérée (122).

3. Procédé selon la revendication 1 ou 2, dans lequel la règle (114) comprend :
la réception, depuis l'utilisateur distant, une sélection d'une règle sélectionnée (122) parmi une pluralité de règles pré-préparées (116), et/ou
la présentation à l'utilisateur distant (150) d'une interface de génération de règles ;
la réception d'une règle générée par l'utilisateur par l'intermédiaire de l'interface de génération de règles ;
la vérification que la règle générée par l'utilisateur est valide et évite d'octroyer à l'utilisateur distant l'accès au paquet de données (102) ; et
l'octroi de l'autorisation d'utiliser la règle générée par l'utilisateur pour générer la note de qualité (118),
dans lequel la réception de la règle (114) comprend la réception de la règle générée par l'utilisateur.

4. Procédé selon la revendication 3, comprenant en outre :
l'ajout de la règle générée par l'utilisateur à un ensemble de règles prégénérées.

5. Procédé selon la revendication 4, comprenant en outre :
la réception d'une seconde demande, par l'intermédiaire du réseau et de l'utilisateur distant, d'une seconde note de qualité d'un second paquet de données, dans lequel une seconde métrique destinée à l'évaluation de la seconde note de qualité est définie par l'utilisateur distant ;
la réception de la règle générée par l'utilisateur, dans lequel la règle générée par l'utilisateur est programmée pour utiliser, en tant qu'entrée, le second paquet de données et générer, en tant que sortie, la seconde note de qualité, et dans lequel la règle générée par l'utilisateur est spécifiée par l'utilisateur distant ;
la génération de la seconde note de qualité (118) par exécution de la règle générée par l'utilisateur sur le second paquet de données (102) ;
la transmission, par l'intermédiaire du réseau (148), de la seconde note de qualité et d'une seconde description du second paquet de données (102) tout en bloquant l'accès de l'utilisateur distant au paquet de données (102). et/ou
comprenant en outre :
la suggestion de la règle générée par l'utilisateur à un second utilisateur en réponse à une seconde demande d'une seconde note de qualité reçue en provenance du second utilisateur, différent de l'utilisateur distant.

6. Procédé selon l'une quelconque des revendications précédentes, comprenant en outre :
la sélection, sur la base de ladite au moins une règle (114) et/ou le paquet de données (102), et/ou un second paquet de données (102) parmi une pluralité de paquets de données supplémentaires ;
la génération de la seconde note de qualité (118) par exécution de la règle (114) sur le second paquet de données (102) ;
la transmission, par l'intermédiaire du réseau (148), de la seconde note de qualité (118) et d'une description (106) du second paquet de données (102) tout en bloquant l'accès de l'utilisateur distant au second paquet de données (102).

7. Procédé selon la revendication 1, comprenant en outre, la pondération, avant la génération de la note de qualité, de la règle.

8. Procédé selon l'une quelconque des revendications précédentes, dans lequel la réception de la règle (114) comprend :
la réception d'une pluralité de règles (116), dans lequel la génération de la note de qualité (118) comprend l'exécution de la pluralité de règles (116) sur le paquet de données (102), et
dans lequel la génération de la note de qualité (118) comprend en outre : la combinaison des sorties de la pluralité de règles (116) ; et,
la pondération, avant la génération de la note de qualité (118), d'une ou plusieurs règles parmi la pluralité de règles (116) ;
dans lequel la pondération est effectuée sur la base d'une ou plusieurs parmi une approbation par le vendeur d'une sélection antérieure de règles (114) précédemment exécutées sur le paquet de données (102), une approbation par un second utilisateur distant d'une sélection antérieure de règles (114) précédemment exécutées sur le paquet de données (102) et une approbation par un second utilisateur distant du paquet de données (102).

9. Procédé selon l'une quelconque des revendications précédentes, comprenant en outre : la réception (210), provenant d'un vendeur, d'une autorisation octroyant à l'utilisateur distant (150) l'accès au paquet de données (102) ; et
l'octroi (214) à l'utilisateur distant (150) de l'accès au paquet de données (102).

10. Procédé selon la revendication 9, dans lequel l'octroi à l'accès au paquet de données (102) comprend :
l'invention permet à l'utilisateur distant (150) de générer des données de sortie en octroyant à l'utilisateur distant (150) l'autorisation d'utiliser un contrôleur d'analyse de données (144) commandé par le vendeur pour analyser le paquet de données (102), tout en empêchant l'utilisateur distant d'accéder directement au paquet de données (102), dans lequel le contrôleur d'analyse de données (144) génère les données de sortie.

11. Procédé selon l'une quelconque des revendications précédentes, dans lequel le paquet de données (102) comprend au moins une donnée parmi des données d'exploration et de production se rapportant à un site de puits de forage et des données d'énergie différentes se rapportant à un site de production d'énergie différent.

12. Système comprenant :
un processeur (1102) ;
une interface de réseau (146) en communication avec le processeur (1102), l'interface de réseau (146) étant programmée pour recevoir une demande, sur un réseau informatique (148), pour une note de qualité (118) d'un paquet de données (102) ;
un support de stockage non transitoire lisible par ordinateur (1106) en communication avec le processeur (1102), le support de stockage non transitoire lisible par ordinateur (1106) mémorisant :
le paquet de données (102),
une règle sélectionnée (122) programmée pour utiliser, en tant qu'entrée, le paquet de données (102) et générer, en tant que sortie, la note de qualité (118),
une description (106) du paquet de données (102),
une métrique (110) reçue en provenance d'un utilisateur distant initialement non autorisé à accéder au paquet de données (102), et
la note de qualité (118) ;
un contrôleur de note de qualité (140) programmé pour :
sélectionner la règle sélectionnée (122) sur la base de la métrique (110) ;
générer la note de qualité (118) par exécution de la règle sélectionnée (122) sur le paquet de données (102) ; et
un contrôleur de sécurité des données (142) programmé pour :
transmettre, par l'intermédiaire de l'interface réseau (146), la note de qualité (118) et la description (106) du paquet de données (102), et
bloquer l'accès par l'utilisateur distant au paquet de données (102).

13. Système selon la revendication 12, comprenant en outre :
un contrôleur d'analyse de données (144) en communication avec l'interface réseau (146) et programmé pour :
recevoir l'autorisation d'un vendeur d'octroyer l'accès au paquet de données (102) ; et
accorder l'accès au paquet de données (102) en permettant à l'utilisateur distant d'analyser le paquet de données (102) à l'aide du contrôleur d'analyse de données (144), tout en empêchant l'utilisateur distant d'accéder directement au paquet de données (102).

14. Système selon la revendication 12 ou 13, dans lequel la métrique (110) comprend au moins un élément parmi : un type de données, un format de données, une source de données, une valeur de précision de données, et des combinaisons de ceux-ci, et dans lequel le contrôleur de note de qualité (140) est programmé en outre pour :
exécuter une règle de sélection pour déterminer la règle sélectionnée (122), dans lequel la règle de sélection utilise, en tant qu'entrée, la métrique (110) et générant, en tant que sortie, la règle sélectionnée (122), et/ou dans lequel la règle sélectionnée (122) comprend une pluralité de règles (116), et
dans lequel la génération de la note de qualité (118) comprend la combinaison des sorties ou la pluralité de règles (116).
